(19) Europäisches Patentamt
European Patent Office
Office européen des brevets

(11) EP 4 424 766 A1

(12) **EUROPEAN PATENT APPLICATION**
published in accordance with Art. 153(4) EPC

(43) Date of publication:
**04.09.2024 Bulletin 2024/36**

(21) Application number: **22886129.0**

(22) Date of filing: **28.10.2022**

(51) International Patent Classification (IPC):
***C08L 23/08*** (2006.01) ***C08L 35/00*** (2006.01)
***C08J 9/00*** (2006.01) ***C08K 5/103*** (2006.01)
***C08K 5/134*** (2006.01) ***C08K 5/526*** (2006.01)

(52) Cooperative Patent Classification (CPC):
**C08J 9/00; C08K 5/103; C08K 5/134; C08K 5/526; C08L 23/08; C08L 35/00**

(86) International application number:
**PCT/CN2022/128276**

(87) International publication number:
**WO 2023/072254 (04.05.2023 Gazette 2023/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.10.2021 CN 202111272418**
**29.10.2021 CN 202111273490**

(71) Applicants:
- **CHINA PETROLEUM & CHEMICAL CORPORATION**
  **Chaoyang District**
  **Beijing 100728 (CN)**
- **BEIJING RESEARCH INSTITUTE OF CHEMICAL INDUSTRY, CHINA PETROLEUM & CHEMICAL CORPORATION**
  **Chaoyang District**
  **Beijing 100013 (CN)**

(72) Inventors:
- **ZHANG, Yaru**
  **Beijing 100013 (CN)**
- **SONG, Wenbo**
  **Beijing 100013 (CN)**
- **LIU, Zhenjie**
  **Beijing 100013 (CN)**
- **CHU, Liqiu**
  **Beijing 100013 (CN)**
- **ZHANG, Xiaomeng**
  **Beijing 100013 (CN)**
- **LI, Juan**
  **Beijing 100013 (CN)**
- **LI, Jie**
  **Beijing 100013 (CN)**
- **KANG, Peng**
  **Beijing 100013 (CN)**

(74) Representative: **Hoffmann Eitle**
**Patent- und Rechtsanwälte PartmbB**
**Arabellastraße 30**
**81925 München (DE)**

(54) **POLYETHYLENE COMPOSITION AND USE THEREOF, AND POLYOLEFIN MICROPOROUS BREATHABLE FILM PREPARED THEREFROM**

(57) A polyethylene composition and the use thereof, and a polyolefin microporous breathable film prepared therefrom. The polyethylene composition comprises a polyethylene matrix resin and a pore-forming agent, wherein the content of the pore-forming agent is 30-110 parts by weight on the basis of 100 parts by weight of the polyethylene matrix resin, the pore-foaming agent comprises maleic anhydride copolymer microspheres, a copolymer in the microsphere comprises a structural unit A from maleic anhydride, a structural unit B from a vinyl-containing comonomer M and an optional cross-linking structure unit from a cross-linking agent, and the average particle size of the maleic anhydride copolymer microspheres is 500-2000 nm. The polyethylene composition can be used for preparing a breathable film without using a coupling agent, a dispersing agent and/or a surfactant, and achieves uniform air permeability and a high water vapor transmission rate. The film can be used for breathable composite products such as sanitary products, medical products, and food packaging or building products.



Processed by Luminess, 75001 PARIS (FR)

(Cont. next page)

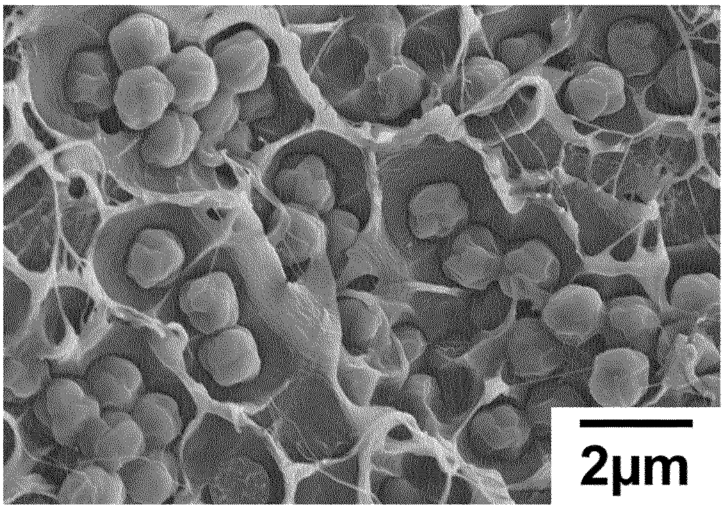


Fig. 1

## Description

### Technical field

The present invention relates to the field of polyolefin compositions, in particular to a polyethylene composition and use thereof and a polyolefin microporous breathable film prepared therefrom, and further to a breathable composite article comprising the polyolefin microporous breathable film.

### Background art

A breathable film is also called "water-blocking breathable microporous film" and has the characteristic of being permeable to gas (such as air, water vapor, etc.) and impermeable to water (water droplets, sweat and other liquids). The breathable film in the prior art is generally a composite material with a thermoplastic plastic as the matrix and filled with a certain proportion of solid particles (such as calcium carbonate, barium sulfate, titanium dioxide, talc powder and other mineral fillers), which composite material is prepared into a thin film via methods such as blowing moulding, calendering or casting, which thin film is then uniaxially or biaxially stretched under appropriate conditions to obtain a microporous thin film material with smaller pores. A microporous breathable film allows gases such as water vapor and air to pass through while blocking liquids, can be widely used in medical supplies such as medical protective clothing, wound care bandages and dressings, in hygiene products such as baby diapers and adult care products, in food packaging and daily products, and in other fields, and is a new material that has developed rapidly in the past two decades.

Theoretically, any thermoplastics can be used as the matrix resin of breathable film materials, but from the overall market value of microporous breathable films, polyethylene breathable films account for the largest proportion. Polyethylene has the advantages of rich sources of starting materials, easy processing and molding, good film-forming effect, comfortable and soft feel, etc., and is widely used as the matrix resin of breathable film materials.

The sanitary product industry is the largest end market for polyethylene breathable films, so the safety and comfort of the breathable films must be taken into consideration. Therefore, high quality is required for a porogen used in the preparation process of polyethylene breathable films. Inorganic fillers, particularly calcium carbonate, have become the preferred material as the porogen due to their abundant resources, low price, and good overall properties. However, inorganic porogens have hydrophilic and oleophobic and extremely polar surface, and have poor compatibility with the polymer matrix, which makes it difficult to disperse uniformly in the matrix. At the same time, the dispersion uniformity of the porogen in the matrix will have an impact on the mechanical properties, surface evenness, pore size uniformity of micropores, porosity and other parameters of the breathable film. In the traditional production process, surfactants are often used to pretreat inorganic fillers to increase their compatibility with the matrix, and at the same time coupling agents and dispersants are added to solve the dispersion problem of inorganic fillers.

CN102336940A discloses a composition for a breathable film with a low permeation volume and a preparation method thereof. The composition comprises a polyolefin resin mixture, a permeation volume regulator, surface-modified micro-scale inorganic particles, an antioxidant, a lubricant and a coupling agent. The advantage of this composition lies in that the micron-scale inorganic filler can improve the mechanical properties of the breathable film, and at the same time the coupling modification of the surface of the inorganic particles can increase their compatibility with polyolefin resin, while the disadvantage lies in that the micron-scale inorganic particles cannot be dispersed uniformly in the matrix resin, thus affecting the breathability uniformity of the film.

CN1176986C discloses a special resin for a polyolefin highly breathable cast film and a preparation method of the film. The special resin is obtained by using a polyolefin resin (compounded by the three polymers of LDPE, LLDPE and propylene copolymer) and an ultra-fine mineral filler (calcium carbonate, talc powder, etc., having a particle size of 3-10 $\mu$m) as the main starting materials, adding a Ti- Al composite coupling agent, POE modifier and OPE dispersant, and subjecting to the processing by coupling treatment, compatibilization and dispersion, internal mixing and extrusion granulation. Via the casting and stretching processes, this special resin produces uniform and fine pores between the two phases of mineral filler particles and polyolefin in the thin film, and then after cooling and crystallization, a polyolefin highly breathable cast film is formed. This method cannot effectively form pores and control the pore size, and moreover uses an internal mixer, which makes the process cumbersome and complicated.

CN101747548A discloses a compound for the preparation of a high-strength polyolefin breathable film and a preparation method thereof. The compound comprises a polyolefin resin, micron-scale and nano-scale inorganic fillers, an antioxidant, a processing aid, and a coupling agent. The nano-scale inorganic filler can improve the mechanical properties of the polyolefin breathable film and reduce the thickness of the breathable film. In addition, breathable film with high strength and high air permeability can be prepared by adjusting process conditions. However, the poor compatibility between the nano inorganic filler and the polyolefin resin would cause uneven breathability of the material, thus affecting the use of the breathable film.

At present, the inorganic porogens used in the production of breathable films on the market have the following

problems: (1) they are easy to agglomerate; (2) the breathable film has a poor pore size uniformity due to the large particle size and uneven particle size distribution, or even a large number of pinhole defects occur; (3) the filler particles have a poor surface modification effect and a poor compatibility with the matrix, thus affecting the strength of the film; and (4) the filler particles have a poor dispersity and will migrate to the surface of the breathable film, causing color differences or spots on the breathable film.

In recent years, there have also been a few publications reporting on the use of organic porogens in breathable films. For example, Bo Shi et al. ("New Breathable Films Using a Themoplastic Cross-Linked Starch as a Porogen", J. Appl. Polym. SCI, 2014, 41016, pages 1-8) discloses a biodegradable breathable film prepared by using natural corn and chemically cross-linked starch as the organic porogen, and poly(butylene adipate terephthalate) as the matrix resin. The film does not use polyolefin as the matrix resin. In addition, although no inorganic porogen is used, mono and diglycerides must be used as the surfactant to convert the two starch porogens into thermoplastic starch or thermoplastic cross-linked starch before blending with the copolyester in film preparation.

## Summary of the invention

In order to overcome the defects existing in the prior art, one object of the present invention is to provide a polyethylene composition for preparing a polyolefin microporous breathable film, which composition can achieve a good dispersion of a porogen in the polyethylene matrix resin without agglomeration in the case of not using coupling agents, dispersants and/or surfactants, and thus can avoid the disadvantages of uneven pore size distribution, poor dispersion, poor compatibility, etc. caused by inorganic porogens. When the composition is used to prepare a breathable film, uniform breathability and improved water vapor transmission rate can be achieved.

Another object of the present invention is to provide a polyolefin microporous breathable film and a breathable composite article comprising the film. The breathable film is characterized by widely adjustable physical properties and air permeability, wide adaptability, simple operation, and stable product performance.

In the present invention, it was unexpectedly found out that the above objects were achieved by using maleic anhydride copolymer microspheres as an organic porogen in a polyethylene matrix resin, which copolymer microspheres have an appropriate compatibility and binding force with the polyethylene matrix resin, particularly, which copolymer microspheres even have a uniform particle size distribution (monodisperse particle size distribution) and preferably have a spherical shape, so that the porogen is well and uniformly dispersed in the polyethylene matrix resin, does not agglomerate therein and binds properly therewith without the use of a coupling agent, a dispersant and/or a surfactant, and thus micropores permeable to air and water vapor but impermeable to liquid water can be generated in a film during the process of preparing the film by casting and stretching and such micropores even have uniform pore sizes.

Thus according to a first aspect, the present invention provides a polyethylene composition, comprising a polyethylene matrix resin and a porogen, wherein the porogen is used in an amount of 30-110 parts by weight based on 100 parts by weight of the polyethylene matrix resin, and the porogen comprises maleic anhydride copolymer microspheres, wherein the copolymer in the microspheres comprises a structural unit A from maleic anhydride, a structural unit B from a vinyl-containing comonomer M, and optionally a cross-linking structural unit from a cross-linking agent, and the average particle size of the maleic anhydride copolymer microspheres is 500-2000 nm.

According to a second aspect, the present invention provides use of the polyethylene composition of the present invention for preparing a polyolefin microporous breathable film.

According to a third aspect, the present invention provides a polyolefin microporous breathable film prepared from the polyethylene composition according to the present invention.

According to a fourth aspect, the present invention provides a breathable composite article comprising the polyolefin microporous breathable film according to the present invention.

## Description of the drawings

Fig. 1 is an SEM photograph of the cross-section of the polyethylene composition sample sheet prepared in Example 1-1;

Fig. 2 is an SEM photograph of the cross-section of the polyethylene composition sample sheet prepared in Example I-3;

Fig. 3 is an SEM photograph of the cross-section of the polyethylene omposition sample sheet prepared in Example I-5;

Fig. 4 is an SEM photograph of the cross-section of the polyethylene composition sample sheet prepared in Example I-6;

Fig. 5 is an SEM photograph of the cross-section of the polyethylene composition sample sheet prepared in Comparative Example 1-1;

Fig. 6 is an SEM photograph of the cross-section of the polyethylene composition sample sheet prepared in Comparative Example I-2;

Fig. 7 is an SEM photograph of the cross-section of the polyethylene composition sample sheet prepared in Comparative Example I-3;

Fig. 8 is an SEM photograph of the cross-section of the polyethylene composition sample sheet prepared in Example 11-1;

Fig. 9 is an SEM photograph of the cross-section of the polyethylene composition sample sheet prepared in Example II-3;

Fig. 10 is an SEM photograph of the cross-section of the polyethylene composition sample sheet prepared in Example II-4;

Fig. 11 is an SEM photograph of the cross-section of the polyethylene composition sample sheet prepared in Example II-6;

Fig. 12 is an SEM photograph of the cross-section of the polyethylene composition sample sheet prepared in Comparative Example II-1;

Fig. 13 is an SEM photograph of the cross-section of the polyethylene composition sample sheet prepared in Comparative Example II-2;

Fig. 14 is an SEM photograph of the cross-section of the polyethylene composition sample sheet prepared in Comparative Example II-3.

## Detailed description of the invention

According to a first aspect, the present invention provides a polyethylene composition, comprising a polyethylene matrix resin and a porogen, wherein the content of the porogen is 30-110 parts by weight based on 100 parts by weight of the polyethylene matrix resin, and the porogen comprises maleic anhydride copolymer microspheres, wherein the copolymer in the microspheres comprises a structural unit A from maleic anhydride and a structural unit B from a vinyl-containing comonomer M, and the average particle size of the maleic anhydride copolymer microspheres is 500-2000 nm.

Herein, the porogen refers to an additive added to a composition for preparing a breathable film, which is capable of generating micropores in a film during the process of preparing the film through orientation. The micropores have the size which allows gases, including air and water vapor, to penetrate, but does not allow liquids, such as water droplets and sweat, to penetrate.

Herein, the microspheres refer to particles having micron-scale size, which may be in the form of spherical, near-spherical or non-spherical particles.

Herein, the average particle size is characterized by the number average particle size, and measured by means of a scanning electron microscope. Specifically, 500 microspheres are selected from the scanning electron microscope photograph, measured for their diameters and calculated for their average particle size using the arithmetic average method. For spherical particles, the diameter is that of the sphere. For near-spherical particles, the diameter is the diameter of the sphere equivalent to the near-spherical body. For non-spherical particles, the diameter refers to the longitudinal axis of the particle (the distance between the two furthest points on the particle profile).

Herein, the terms "spherical" and "near-spherical" mean that the aspect ratio of the particle is substantially in the range of from 1 to 2.

## Porogen

In the polyethylene composition of the present invention, based on 100 parts by weight of the polyethylene matrix resin, the porogen may be used in an amount of 30-110 parts by weight, preferably 35-110 parts by weight, more preferably 50-100 parts by weight, still more preferably 50-90 parts by weight.

The polyethylene composition of the present invention comprises maleic anhydride copolymer microspheres as an organic porogen, and preferably comprises only maleic anhydride copolymer microspheres as the porogen.

The average particle size of the maleic anhydride copolymer microspheres used in the present invention is smaller than the average particle size of the inorganic porogen (for example, calcium carbonate) used in the prior art, and can be 500-2000nm, preferably 500-1700nm, preferably 500-1600nm, preferably 500-1500nm, more preferably 600-1300nm, more preferably 800-1300nm, and more preferably 900-1200nm.

The maleic anhydride copolymer microspheres are preferably spherical or near spherical.

The maleic anhydride copolymer microspheres preferably have a uniform particle size distribution. Preferably, the copolymer microspheres are monodispersed copolymer microspheres, particularly those having a particle size dispersion coefficient of 1.05-1.0001, preferably 1.035-1.002, and more preferably 1.028-1.002.

The particle size dispersion coefficient (U) is measured by the following method: taking a sample from the

polymer dispersion system and observing the morphology of the polymer microspheres using a scanning electron microscope. The size of the microspheres is expressed by the average particle diameter ($D_n$), and the particle size distribution is expressed by the dispersion coefficient. The formulae are as follows:

$$D_n = \sum_{i=1}^{k} D_i / N \quad (1)$$

$$D_w = \sum_{i=1}^{k} D_i^4 / \sum_{i=1}^{k} D_i^3 \quad (2)$$

$$U = D_w / D_n \quad (3)$$

wherein $D_i$ is the diameter (nm) of the $i^{th}$ particle, N is the sample size, $D_n$ is the defined mathematical average diameter, and $D_w$ is the defined weight average diameter.

Such a uniform particle size distribution enables a more uniform distribution of micropores in the prepared breathable film.

The molar ratio of the structural unit A from maleic anhydride to the structural unit B from the vinyl-containing comonomer M in the maleic anhydride copolymer microsphere can be in the range of (0.5:1) to (1:0.5), preferably (0.75:1) to (1:0.75).

Based on the total molar amount of structural units A and B in the copolymer, the molar content of structural unit A may be 48-55%, preferably 48-53%, and the molar content of structural unit B may be 45-52%, preferably 47-52%. More preferably, the molar content of the structural unit A is 49-51%, and the molar content of the structural unit B is 49-51%, that is, it is preferred that the copolymer has an alternating copolymerization structure.

The vinyl-containing comonomer M is preferably at least one selected from the group consisting of styrene, $\alpha$-methyl styrene, vinyl acetate, mixed C4 and mixed C5.

In the present invention, the mixed C4 refers to the general name of hydrocarbon compounds having four carbon atoms (mainly including butene). Generally, besides butenes of various different structures (such as trans-2-butene, cis-2-butene, n-butene, and isobutene), C4 also includes a certain amount of alkanes (e.g., n-butane) and other possible impurities. In the present invention, the content of olefins in the mixed C4 is in the range of 60-75% by weight.

In the present invention, the mixed C5 refers to the general name of hydrocarbon compounds having five carbon atoms (mainly including pentene). Generally, besides pentenes of various different structures (such as dienes (isopentadiene, cyclopentadiene, 1,4-pentadiene and piperylene) and monoolefins (1-pentene, 2-pentene, cyclopentene, 2-methyl-1-butene and 2-methyl-2-butene)), C5 also includes a certain amount of alkanes (such as n-pentane, isopentane, cyclopentane and 2-methylbutane), alkynes (such as butyne-2 and 3-penten-1-yne) and other possible impurities. In the present invention, the content of olefins in the mixed C5 is 55-65% by weight.

The mixed C4 and mixed C5 can come from petroleum refining or petrochemical production process, such as the C4 and C5 fractions obtained from the ethylene cracking process, liquefied fuels produced in the petroleum refining process, cracked gases produced from naphtha cracking, gases produced by the preparation of olefins from methanol, etc.

In one embodiment, the maleic anhydride copolymer microspheres may be cross-linked maleic anhydride copolymer microspheres cross-linked by a cross-linking agent. The copolymer in the microspheres additionally comprises a cross-linking structural unit from the cross-linking agent. The cross-linking degree of the copolymer microspheres may be ≥65%, more preferably ≥70%. The cross-linking degree is determined by an extraction method using tetrahydrofuran.

The structural unit A and the structural unit B in the cross-linked maleic anhydride copolymer microspheres are also as described above.

The cross-linking agent described herein can be a variety of common vinyl-containing monomers with difunctionality or higher functionality which are capable of free radical polymerization. Preferably, the cross-linking agent is at least one selected from the group consisting of divinylbenzene and an acrylate cross-linking agent containing at least two acrylate groups. The structural formula of the acrylate group is preferably: $-O-C(O)-C(R')=CH_2$, R' being H or a $C_1$-$C_4$ alkyl (for example, methyl). More preferably, the cross-linking agent is at least one selected from the group consisting of divinylbenzene, propylene glycol bis(meth)acrylates (such as 1,3-propanediol dimethacrylate, 1,2-propanediol dimethacrylate, 1,3-propanediol diacrylate and 1,2-propanediol diacrylate), ethylene glycol bis(meth)acrylates (ethylene glycol dimethacrylate, ethylene glycol diacrylate, diethylene glycol dimethacrylate, diethylene glycol diacrylate, triethylene glycol dimethacrylate, triethylene glycol diacrylate, tetraethylene glycol dimethacrylate and tetraethylene glycol diacrylate), trimethylolpropane tri(meth)acrylate, bistrimethylolpropane tetra(meth)acrylate, polyethylene glycol

bis(meth)acrylate, phthalic acid diethylene glycol diacrylate, pentaerythritol tetra(meth)acrylate, dipentaerythritol penta(meth)acrylate, dipentaerythritol hexa(meth)acrylate and ethoxylated multifunctional acrylate. More preferably, the cross-linking agent is divinylbenzene.

In the cross-linked maleic anhydride copolymer microspheres, the molar ratio of the structural unit A, the structural unit B and the cross-linking structural unit may be 100:(100-120):(1-40) , preferably 100:(100-105):(10-30).

The maleic anhydride copolymer microspheres can be prepared by methods known in the prior art, especially by the two methods described below.

In the first preparation method, maleic anhydride copolymer microspheres can be prepared by a method comprising the following steps:

(1) in an inert atmosphere, dissolving maleic anhydride, a comonomer and an initiator in a reaction medium to form a homogeneous solution, wherein the comonomer can be at least one selected from the group consisting of styrene, α-methyl styrene and vinyl acetate;
(2) subjecting the homogeneous solution to polymerization reaction to obtain a copolymer emulsion suspension, followed by solid-liquid separation to obtain the maleic anhydride copolymer microspheres.

Based on the total weight of the maleic anhydride and comonomer, the maleic anhydride is used in an amount of 50-90wt%, and the comonomer is used in an amount of 10-50wt%; preferably, the maleic anhydride is used in an amount of 50-60wt%, and the comonomer is used in an amount of 40-50wt%.

In step (1) of this method, the total mass concentration of the maleic anhydride and the comonomer may be 5-25 wt%, preferably 5-20 wt%, based on the total weight of the homogeneous solution. The mass concentration of the initiator may be 0.01-5wt%, preferably 1-4wt%, based on the total weight of the homogeneous solution.

The reaction medium may be selected from ketones and mixtures thereof with alkanes, preferably a mixture of a compound represented by formula (1) and an alkane:

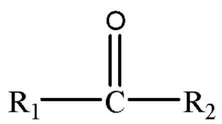

formula (1)

wherein $R_1$ and $R_2$ are each independently an alkyl having 1 to 6 carbon atoms, preferably 1 to 4 carbon atoms, and more preferably methyl or ethyl.

The alkane is preferably an alkane having 6 to 12 carbon atoms, preferably at least one selected from the group consisting of hexane, heptane and octane, and more preferably hexane. Based on the total volume of the reaction medium, the amount of the alkane may be 50-90 vol%, preferably 60-80 vol%.

In this method, by using a mixture of a compound represented by formula (1) and an alkane as the reaction medium, which can interact with a specific amount of maleic anhydride and comonomer, self-stabilizing precipitation polymerization reaction of the maleic anhydride and comonomer can be achieved, wherein the polymerization reaction system requires no stabilizer and co-stabilizer to be added and has a self-stabilizing dispersion effect. The obtained polymer microspheres have uniform particle sizes and clean surfaces without pollution (as can be seen by observing the surface in the SEM photograph).

The polymerization reaction in step (2) is carried out in an inert atmosphere, which can be provided by a conventional inert gas in the prior art, for example, nitrogen. The conditions for the polymerization reaction may include: a polymerization temperature of 61-100°C, preferably 70-90°C; and a polymerization time period of 1-24h, preferably 2-12h.

The solid-liquid separation may be in the manner of a conventional solid-liquid separation in the art, for example, centrifugal separation or flash separation. When centrifugal separation is adopted, the centrifugal rotational speed can be 1500-5000rad/min, and the centrifugal time can be 5-60 minutes. When flash separation is adopted, it can be carried out in a flash separator, the flash temperature can be 10-40°C, and the flash pressure can be about 0MPa.

In this preparation method, the maleic anhydride monomer and the comonomer are copolymerized in a specific ratio, so that the produced maleic anhydride copolymer takes on microspheres with excellent uniformity, and the copolymer is characterized by a clean surface, has a good dispersion in the medium and does not agglomerate. Particularly when the amount of the maleic anhydride is 50-60wt% and the amount of the comonomer is 40-50wt%, based on the total weight of polymerized monomers, the prepared maleic anhydride copolymer microspheres have uniform particles, excellent particle morphology, and clean particle surface, and the copolymer microspheres have better overall performance.

In the second preparation method, the maleic anhydride copolymer microspheres can be prepared by a method

comprising the following step:
under an inert atmosphere, in an organic solvent and in the presence of an initiator, subjecting maleic anhydride, a comonomer M and optionally a cross-linking agent to copolymerization reaction to obtain optionally cross-linked maleic anhydride copolymer microspheres, wherein the comonomer M can be at least one selected from the group consisting of styrene, $\alpha$-methyl styrene, vinyl acetate, mixed C4 and mixed C5. Herein, in the case of preparing non-crosslinked maleic anhydride copolymer microspheres, the comonomer M is preferably selected from mixed C4 and/or mixed C5.

In this preparation method, the copolymerization reaction may be a one-step reaction using a precipitation polymerization method. The copolymerization reaction can be carried out at a temperature of 50-100°C, preferably 60-90°C, more preferably 70-90°C, under a pressure of 0.1-2MPa, preferably 0.2-2MPa, preferably 0.5-1MPa, and for a reaction time period of 3-15h, preferably 5-12h, more preferably 5-10h, preferably 6-9h.

Unless otherwise stated, the pressure described herein refers to gauge pressure.

The weight ratio of the maleic anhydride to the comonomer may be 1:(0.2-3), preferably, 1:(0.8-3). Alternatively, relative to 100 mol of maleic anhydride, the amount of the comonomer M may be 50-150 mol, more preferably 75-100 mol.

The organic solvent may include an organic acid alkyl ester, for example, it may be selected from an organic acid alkyl ester, or a mixture of an organic acid alkyl ester and an alkane, or a mixture of an organic acid alkyl ester and an aromatic hydrocarbon. The organic acid alkyl esters include, but are not limited to: at least one of methyl formate, ethyl formate, propyl formate, butyl formate, isobutyl formate, amyl formate, methyl acetate, ethyl acetate, propyl acetate, butyl acetate, isobutyl acetate, sec-butyl acetate, amyl acetate, isoamyl acetate, benzyl acetate, methyl propionate, ethyl propionate, butyl propionate, methyl butyrate, ethyl butyrate, butyl butyrate, isobutyl butyrate, isoamyl butyrate, isoamyl isovalerate, methyl benzoate, ethyl benzoate, propyl benzoate, butyl benzoate, isoamyl benzoate, methyl phenylacetate and ethyl phenylacetate, preferably at least one selected from isoamyl acetate, butyl acetate, isopropyl acetate and ethyl acetate. The alkane includes, but is not limited to: n-hexane and/or n-heptane. The aromatic hydrocarbon includes, but is not limited to: at least one of benzene, toluene and xylene.

The amount of the organic solvent is not particularly limited, as long as it can provide a medium for the reaction. Preferably, relative to 100 mol of maleic anhydride, the amount of the organic solvent can be 50-150L, more preferably 75-100L; or based on the total weight of the organic solvent, the concentration of the maleic anhydride can be 5-25 wt%; preferably 10-20 wt%.

In these two preparation methods, the amount of the initiator is not particularly required. Preferably, based on the total amount of maleic anhydride, the amount of the initiator can be 0.05-20 mol%, preferably 0.05-10 mol%, and more preferably 1-1.5 mol%.

The initiator can be a common reagent in the art used for initiating the polymerization reaction of maleic anhydride and a vinyl-containing monomer such as $\alpha$-methyl styrene (or styrene), and can be a thermal decomposition initiator, for example, organic peroxides and/or azo compounds. The organic peroxide can be at least one selected from the group consisting of dibenzoyl peroxide, dicumyl peroxide, di-tert-butyl peroxide, dodecanoyl peroxide, tert-butyl peroxybenzoate, diisopropyl peroxydicarbonate and dicyclohexyl peroxydicarbonate. The azo compound can be selected from azobisisobutyronitrile and/or azobisisoheptanitrile.

A water bath and/or an oil bath may be used to provide the heat required for the polymerization.

In the method of preparing cross-linked maleic anhydride copolymer microspheres, relative to 100 mol of maleic anhydride, the amount of the comonomer M can be 50-150 mol, preferably 75-100 mol; the amount of the cross-linking agent can be 1-40 mol, preferably 10-20 mol, further preferably 15-20 mol; and the amount of the initiator can be 0.05-10 mol, preferably 1-1.5 mol.

In the method of preparing cross-linked maleic anhydride copolymer microspheres, the reaction conditions may include: performing the reaction in the presence of an inert atmosphere, at a reaction temperature of 50-90°C, preferably 60-70°C, for a reaction time period of 3-15h, preferably 5-12h, and under a reaction pressure of 0.1-1MPa, preferably 0.1-0.5MPa. The product (the suspension) obtained by the polymerization reaction is subjected to post-treatment steps such as separation, washing, drying, etc. to obtain cross-linked maleic anhydride copolymer microspheres.

The copolymer emulsion suspension obtained by the polymerization reaction can be separated by a solid-liquid separation method to obtain composite microspheres. Conventional solid-liquid separation methods in the prior art can be used, preferably, centrifugal separation is used. When adopting centrifugal separation, the centrifugal rotational speed is 1500-5000rad/min, and the centrifugation time is 5-60min.

By adding maleic anhydride copolymer microspheres as a porogen to the composition of the present invention, the porogen can be uniformly dispersed in the polyethylene matrix without using coupling agents, dispersants and/or surfactants, and the micropores have appropriate and uniform pore sizes; and by adjusting the maleic anhydride copolymer microspheres, breathable film characterized by widely adjustable physical properties and air permeability, wide adaptability, simple operation, and stable product performance can be achieved.

In addition, by adding maleic anhydride copolymer microspheres as organic porogen, the melting enthalpy $\Delta H_{mPE}$ of the polyethylene matrix resin and the melting enthalpy $\Delta H_{m\ composition}$ of the polyethylene composition satisfying the following relationship can be particularly achieved: the difference between $\Delta H_{m\ PE}$ and $\Delta H_{m\ composition}$ is in the range

of 8-48J/g, preferably 10-45J/g, more preferably 20-45J/g.

When the difference between the melting enthalpy of the polyethylene and the melting enthalpy of the polyethylene composition is well within the above range, the maleic anhydride copolymer microspheres are uniformly distributed in the polyethylene composition, and the phenomenon of significant decrease in the melting enthalpy of the composition due to the agglomeration of the maleic anhydride copolymer microspheres does not occur, so that the breathable film prepared from the composition has both excellent physical properties and breathable performance.

In the present invention, the melting enthalpy of the polyethylene and of the polyethylene composition is measured by differential scanning calorimetry.

In addition, the density of the polyethylene composition of the present invention $\rho_{composition}$ and the density of polyethylene $\rho_{PE}$ can satisfy the relationship formula: the difference between $\rho_{composition}$ and $\rho_{PE}$ is in the range of 0.045-0.155g/cm$^3$. When the maleic anhydride copolymer microspheres are non-crosslinked maleic anhydride copolymer microspheres, the difference is preferably 0.055-0.155g/cm$^3$, and more preferably 0.068-0.145g/cm$^3$; when the maleic anhydride copolymer microspheres are cross-linked maleic anhydride copolymer microspheres, it is preferably 0.045-0.120g/cm$^3$, and more preferably 0.050-0.110g/cm$^3$.

The density of polyethylene is measured according to the method specified in GBIT 1033.2-2010 and using the density gradient column method.

The density of the polyethylene composition is determined by using a melt flow rate meter to press out a bubble-free molten specimen at 190°C and under a load of 2.16kg according to the method specified in GBIT 3682-2000, followed by the mass-volume method using a balance, a 25mL volumetric flask and anhydrous ethanol.

**Polyethylene matrix resin**

The composition of the present invention uses polyethylene as the matrix resin. The polyethylene matrix resin can be selected from ethylene homopolymers (such as low density polyethylene (LDPE), high density polyethylene (HDPE) and ultra-high molecular weight polyethylene (UHMWPE)), ethylene copolymers (such as linear low density polyethylene (LLDPE), very low density polyethylene (VLDPE), high density polyethylene (HDPE), medium density polyethylene (MDPE), ethylene-vinyl acetate copolymer and ethylene-methyl acrylate copolymer) and mixtures thereof or blends with other polyolefins (such as propylene homopolymers, propylene-based copolymers, polyolefin plastomers, polyolefin elastomers and polybutylene).

The polyethylene matrix resin is preferably selected from a mixture of linear low density polyethylene and low density polyethylene, wherein the amount of linear low density polyethylene can be 60-99 parts by weight, preferably 70-95 parts by weight, and the amount of low density polyethylene can be 1-40 parts by weight, preferably 5-30 parts by weight, based on 100 parts by weight of polyethylene.

The linear low density polyethylene can be a copolymer of ethylene and $\alpha$-olefin. Preferably, the $\alpha$-olefin can be at least one selected from the group consisting of butene, hexene and octene.

The linear low density polyethylene may have a density of 0.905g/cm$^3$-0.935g/cm$^3$. Preferably, the linear low density polyethylene has a melt flow rate at 190°C and under a load of 2.16kg of 0.5g/10min-10g/10min, preferably 2g/10min-6g/10min. Preferably, the linear low density polyethylene has a molecular weight distribution of 2-12, preferably 2-10.

The density of the low density polyethylene may be 0.913g/cm$^3$-0.934g/cm$^3$. The melt flow rate of the low density polyethylene at 190°C and under a load of 2.16kg is preferably 0.1g/10min-12g/10min, preferably 2g/10min-9g/10min. The molecular weight distribution of the low density polyethylene is preferably 5-11, preferably 6-10.

Herein, the melt flow rate MFR is determined at 190°C and under a load of 2.16kg according to the method specified in GBIT 3682-2000; the density is determined according to the method specified in GBIT 1033.2-2010 and using the density gradient column method; and the molecular weight distribution is determined by GPC.

The ethylene homopolymers and copolymers are commercially available or can be prepared by methods known in the art. The linear low density polyethylene is preferably prepared by catalytic polymerization using a Ziegler-Natta catalyst and/or a metallocene catalyst.

**Antioxidant**

The polyethylene composition may additionally comprise an antioxidant. The amount of the antioxidant is preferably 0.1-2.5 parts by weight, preferably 0.1-2 parts by weight, more preferably 0.1-1.5 parts by weight, still more preferably 0.2-1.5 parts by weight, based on 100 parts by weight of the polyethylene matrix resin.

The antioxidant may be an antioxidant known in the art that is suitable for polyolefin compositions, for example, at least one, preferably at least two, of the antioxidants of hindered phenols, phosphites and thioesters, and preferably at least one selected from the group consisting of pentaerythritol tetrakis[$\beta$-(3,5-di-tert-butyl-4-hydroxyphenyl)propionate], tris(2,4-di-tert-butylphenyl)phosphite, octadecyl propionate (for example, n-octadecyl 3-(3,5-di-tert-butyl-4-hydroxyphenyl)propionate) and alkylated polyphenols.

In a preferred embodiment, the antioxidant is an antioxidant composite additive comprising an antioxidant and an acid acceptor. The weight ratio of the antioxidant to the acid acceptor may be 1-6:1, preferably 2-5:1. The acid acceptor may be a stearate salt, preferably at least one selected from the group consisting of calcium stearate, zinc stearate and sodium stearate.

Preferably, the antioxidant composite additive is a mixture of pentaerythritol tetrakis[β-(3,5-di-tert-butyl-4-hydroxyphenyl)propionate], tris(2,4-di-tert-butylphenyl)phosphite and calcium stearate, wherein the weight ratio of pentaerythritol tetrakis[β-(3,5-di-tert-butyl-4-hydroxyphenyl)propionate], tris(2,4-di-tert-butylphenyl)phosphite and calcium stearate can be (1-3):(1-3):1, preferably (1-2):(1-2):1.

**Other additives**

By using maleic anhydride copolymer microspheres as organic porogen, it is possible for the polyethylene composition of the present invention not to comprise a coupling agent, a dispersant or a surfactant or two or three of them, for example, not to comprise a coupling agent and a dispersant.

A coupling agent refers to an additive commonly used in the art to improve the interface property between a matrix resin and an inorganic filler or a reinforcing material in plastic compounding, for example, stearic acid, zinc stearate, calcium stearate, magnesium stearate, titanate ester coupling agent, aluminate ester coupling agent, silane coupling agent, lanthanum stearate and other rare earth carboxylate coupling agents, as well as Ti-Al and Al-Zr composite coupling agents, used in the polyethylene breathable films using an inorganic porogen in the prior art.

A dispersant refers to an additive that can enhance and improve the dispersion performance of a solid or liquid material in a medium, thereby reducing the aggregation of the solid or liquid particles in the dispersion system, for example, paraffin oil, PE wax, oxidized polyethylene (OPE) dispersant, higher alcohols ($C_{16}$-$C_{18}$), etc. used in the polyethylene breathable films using an inorganic porogen in the prior art.

A surfactant refers to a compound that can reduce the surface tension (or interfacial tension) between two liquids, between a gas and a liquid, or between a liquid and a solid, for example, the mono- and di-glycerides used in the polyester breathable films using a starch as the porogen in the prior art.

However, the composition of the present invention may additionally comprise an inorganic porogen selected from calcium carbonate, barium sulfate, titanium dioxide, talc, clay, etc. as a secondary porogen, and may also comprise other conventional additives suitable for breathable films.

**Preparation and product forms of polyethylene compositions**

The polyethylene composition of the present invention may be in the form of powders or pellets.

The powder can be prepared by mixing the various components. Any suitable mixing equipment can be used here.

The pellets can be obtained by melt blending, extruding, pelletizing and drying the polyethylene composition. Any suitable extruder, preferably a twin-screw extruder, can be used here. The pellets can be prepared using conventional process conditions.

Specifically, the pellets can be prepared by a method comprising the following steps:

(1) mixing a polyethylene matrix resin, a porogen and optionally other additives to obtain a mixture; and
(2) melt-blending, extruding, pelletizing and drying the mixture in a twin-screw extruder to obtain the polyethylene composition pellets.

The rotational speed of the twin-screw extruder can be 150-400 r/min, preferably 180-350 r/min. The temperatures of the feed section, melting section, homogenizing section and die of the twin-screw extruder can be 150-180°C, 165-200°C, 180-215°C and 175-210°C, respectively. Preferably, the temperatures of the feed section, melting section, homogenizing section and die of the twin-screw extruder are 160-175°C, 175-190°C, 190-210°C and 180-205°C, respectively.

**Breathable film and its applications**

According to a second aspect, the present invention provides the use of the above polyethylene composition in a polyolefin microporous breathable film.

The polyethylene composition of the present invention can be used to prepare a polyolefin microporous breathable film. The obtained breathable film is significantly improved in physical properties and air permeability, and thus can be used as a water-blocking and moisture-permeable material for various breathable composite articles, particularly

sanitary articles, medical articles, food packaging or building articles, such as disposable medical and sanitary products, baby diapers, adult care products, medical protective clothing, wound care bandages, dressings, food packaging films, industrial protective clothing, etc.

According to a third aspect, the present invention provides a polyolefin microporous breathable film, prepared from the polyethylene composition described above.

The method for the preparation of the polyolefin microporous breathable film is not particularly limited. It can be prepared by selecting a suitable method according to need, preferably by extrusion casting and stretching. For example, a polyethylene composition is added to an extrusion casting machine to melt and cast a cast sheet, with the extrusion temperature being 210-240°C and the temperature of the cooling roller being 20-60°C, thereby to produce a polyethylene cast film. Then, the cast film is uniaxially stretched 2-5 times to obtain a polyethylene microporous breathable film having an average thickness of 25-35 μm, wherein the heat setting temperature is 70-120°C.

The polyolefin microporous breathable film of the present invention has at least one of the following characteristics:

1) a thickness of 25-35μm;
2) a water vapor transmission rate of greater than or equal to 3060g/($m^2$·24h);
3) a porosity of greater than or equal to 38%;
4) a longitudinal tensile strength ≥ 25MPa, a transverse tensile strength ≥ 5MPa, a longitudinal elongation at break ≥ 125%, and a transverse elongation at break ≥ 355%; and
5) a surface density of the breathable film of less than or equal to 24.5g/$m^2$ (measured for a sample having a thickness of 30 microns).

The polyolefin microporous breathable film prepared from the above polyethylene composition does not only keep the excellent physical properties of the polyethylene composition, and more importantly, the polyolefin microporous breathable film has a high air permeability and can be used as a water-blocking and moisture-permeable material for use in various breathable composite articles.

Thereby, according to a fourth aspect, the present invention provides a breathable composite article comprising the polyolefin microporous breathable film, particularly sanitary articles, medical articles, food packaging or building articles, such as disposable medical and sanitary products, baby diapers, adult care products, medical protective clothing, wound care bandages, dressings, food packaging films, industrial protective clothing, etc.

The endpoints of ranges and any values disclosed herein are not limited to the precise ranges or values, but these ranges or values are to be understood to include values close to these ranges or values. For numerical ranges, the endpoint values of each range, the endpoint values of each range and individual point values, and the individual point values can be combined with each other to obtain one or more new numerical ranges, which numerical ranges shall be deemed to be specifically disclosed herein.

## Examples

The present invention will be described in detail below by means of examples. It should be understood that the specific examples described here are only used to illustrate the present invention and are not intended to limit the present invention.

The relevant data in the present invention and examples are obtained according to the following test methods:

1. The content of each structural unit in the maleic anhydride copolymer microspheres was tested by $^1$H NMR using the Avance 300 nuclear magnetic resonance spectrometer from the company Bruker in Switzerland. The test method involves calculating the content of each structural unit via the proportion of the peak area corresponding to the characteristic hydrogen in the corresponding structural unit in $^1$H NMR.

2. Polymerization yield of the maleic anhydride copolymer (Cp): Cp=Mp×100%/Mm where Mp was the mass of the polymer obtained; and Mm was the total mass of monomers added.

3. Method for testing the particle size of the copolymer microsphere: After gold spraying under vacuum, the copolymer microsphere powder was observed for its morphology on a Hitachi S4800 field emission scanning electron microscope from the company Hitachi. 500 microspheres were selected from the electron microscope photograph, measured for their diameters and calculated for their average particle size using the arithmetic average method. For spherical particles, the diameter was the diameter of the sphere. For near-spherical particles, the diameter was the diameter of the sphere equivalent to the near-spherical body. For particles having other shapes, the diameter referred to the length of the longitudinal axis of the particle (the distance between the two furthest points on the particle profile).

4. Particle size distribution of the maleic anhydride copolymer microspheres: It was obtained by measuring and calculating at least 500 microspheres in the scanning electron microscope photograph using the Nano Measurer 1.2 software. Particle size and particle size distribution of the polymer microspheres were calculated according to Formulae (1) to (3):

$$D_n = \sum_{i=1}^{k} D_i / N \qquad \text{Formula (1)}$$

$$D_w = \sum_{i=1}^{k} D_i^4 / \sum_{i=1}^{k} D_i^3 \qquad \text{Formula (2)}$$

$$U = D_w / D_n \qquad \text{Formula (3)}$$

wherein Di was the diameter (nm) of the $i^{th}$ particle, N was the sample size, $D_n$ was the defined mathematical average diameter, and $D_w$ was the defined weight average diameter.

5. Specific surface area of the copolymer microspheres: determined by the nitrogen physical adsorption BET method in accordance with the international test standard ISO-9277 using the ASAP2020C+M fully automatic specific surface and porosity analyzer from the company Micromeritics, USA.

6. Conversion efficiency of the mixed C4: weighing the polymer after the reaction;

conversion efficiency(%)=[(4×mass of the polymer actually obtained)/(11×mass of C4 actualyy used)]×100%.

7. Molecular weight of the copolymer microspheres: The molecular weight of the sample was determined using the Waters 2410 gel permeation chromatograph manufactured by the company WATERS, USA, wherein the chromatographic column was three WATERS Styragel columns in series, the standards were polystyrene (PS), a DMF solvent system was used and the flow rate was 1.0mLImin.

8. Morphology of the cross-section of the polyethylene composition sample sheet and dispersion of the porogen: A sample was soaked in liquid nitrogen for 15 minutes, followed by brittle fracture, the fractured section was subjected to gold spraying treatment, and then the fractured section of the material was characterized by the Hitachi S4800 field emission scanning electron microscope from the company Hitachi, to obtain a microscopic morphology photograph.

9. Melt flow rate MFR: determined at 190°C and under a load of 2.16kg according to the method specified in GBIT 3682-2000 using the UPXRZ-400C melt flow rate meter from the company Ceast, Italy.

10. Density of polyethylene: determined according to the method specified in GBIT 1033.2-2010 and using the density gradient column method.

11. Tensile properties: The tensile properties of the polyethylene composition were determined in accordance with the method specified in GBIT 1040.2-2006 and using the 5966 universal material testing machine from the instrument company INSTRON, USA; and the tensile properties of the breathable film were determined in accordance with the method specified in GBIT 1040.3-2006 and using the XLW intelligent electronic tensile testing machine from Labthink Instruments Co. Ltd., Jinan, China.

12. Tc, Tm and ΔHm: A DSC25 differential scanning calorimeter from the company TA Instruments, USA was used to analyze the melting process and crystallization process of the material. The specific operation involves measuring 5-10mg of a sample (diameter of 5.4mm, thickness of 1-1.5mm) in a three-stage raising/lowering temperature measurement procedure from 20°C to 200°C under nitrogen protection, wherein the changes in heat flow reflects the melting and crystallization processes of the material; and calculating the crystallization temperature Tc, melting temperature Tm and melting enthalpy △Hm according to GBIT 19466.3-2004.

13. Density of the polyethylene composition: The polyethylene composition was pressed by the UPXRZ-400C melt flow rate meter from the company Ceast, Italy at 190°C and under a load of 2.16kg according to the method specified in GBIT 3682-2000 into a bubble-free molten specimen, which was cooled, cut into pieces, and then baked in a vacuum oven at 100°C for 8 hours to serve as a composition sample for density testing.
A 25 mL volumetric flask was placed on a balance, which was removed of tare and cleared; the polyethylene composition sample was put on and recorded as weight M1; anhydrous ethanol was added slowly with a dropper into the volumetric flask, so that the polyethylene composition sample was completely soaked into the anhydrous ethanol; after the dropwise addition was completed, the resultant was allowed to stand still for two hours, the liquid level was kept flush with the scale line of the volumetric flask, and weight M2 was recorded; the volume of anhydrous ethanol in the volumetric flask should be $V_{ethanol}$ = (M2-M1)/$\rho_{ethanol}$; the volume of the polyethylene composition was V=25-$V_{ethanol}$; the density of the sample was $\rho_{composition}$=M1/V.

14. Water vapor transmission rate (WVTR): determined according to the method specified in GBIT 12704-1991.

15. Porosity of the breathable film: determined with ASTM-D2873-1994. A breathable film was immersed in n-hexadecane for 1 hour and then taken out, the n-hexadecane remaining on the surface was wiped dry with a filter paper, the change in mass of the breathable film before and after immersion was weighed, and the porosity was calculated according to formula (4)

$$\theta = \frac{m_a / \rho_a}{m_a / \rho_a + m_b / \rho_b} \qquad \text{formula (4)}$$

wherein $m_a$ was the mass of n-hexadecane in the breathable film after liquid absorption; $m_b$ was the mass of the breathable film before liquid absorption; $\rho_a$ was the density of n-hexadecane; $\rho_b$ was the density of the specific material.

16. Surface density of the breathable film: determined according to GBIT 31729-2015, with the sample thickness being 30$\mu$m.

17. Cross-linking degree of the cross-linked maleic anhydride copolymer: The cross-linking degree was characterized by gel content. 2-3 grams of polymer microspheres was weighed out (the weight was recorded as w1), wrapped with a medium-speed qualitative filter paper, placed into a Soxhlet extractor, and extracted with tetrahydrofuran for 24 hours, the extracted polymer was dried and weighed (the weight was recorded as w2), and the cross-linking degree was calculated by w2/w1.

18. The content of each structural unit in the cross-linked copolymer: For the cross-linked maleic anhydride-$\alpha$-methyl styrene copolymer microspheres, the amount of the monomer or cross-linking agent that did not participate in the reaction was analyzed using LC-MC (2695 liquid chromatograph and Q-Tof Micro Mass spectrometer from the company Waters , USA), and the molar ratio of structural unit A, structural unit B and cross-linking structural unit was calculated based on the feed amount; for the cross-linked mixed C4-maleic anhydride copolymer microspheres, the contents of carbon and oxygen in the polymer were determined by X-ray fluorescence spectroscopic analysis; the clear liquid after centrifugation was analyzed by the Agilent 7890A gas chromatograph from the company Agilent to determine the contents of the remaining maleic anhydride and the cross-linking agent; the results were comprehensively analyzed to calculate the molar ratio of structural unit A, structural unit B and cross-linking structural unit in the polymer.

The starting materials used in the examples and comparative examples were commercially available products, unless otherwise clearly stated.

The solvents and liquid monomers were treated to be oxygen- and water-free.

The pressure was gauge pressure.

Preparation Example 1

Preparation of porogen A1

302.5g of maleic anhydride, 51.3g of azobisisobutyronitrile, 299.9g of styrene, 1.462L of acetone and 4.614L of hexane (the amount of hexane: 75.9vol%) were added into a 20L reaction kettle (wherein with respect to the polymerized

monomers, the amount of maleic anhydride was 50.2wt%, and the amount of styrene was 49.8wt%). After the materials were mixed homogeneously (wherein in the homogeneous solution, the mass concentrations of maleic anhydride and styrene were both 6.2wt%, and the mass concentration of the initiator was 1.1wt%), nitrogen was introduced for 20 minutes, and the temperature of the reaction kettle was raised to 70°C; the reaction was carried out for 6 hours. After the reaction was completed, the obtained polymer emulsion suspension was centrifuged via a centrifuge at a rotational speed of 2000rad/min for 20 minutes to obtain 542g of the maleic anhydride-styrene copolymer microspheres A1 as the porogen, wherein the corresponding polymerization yield was 90%.

The copolymer microspheres A1 were analyzed by $^1$H NMR to show that based on the total molar amount of the various structural units in the polymer, the molar content of the structural unit A from maleic anhydride was 49.5%, and the molar content of the structural unit B from styrene was 50.5%.

The maleic anhydride copolymer microspheres A1 as the porogen had an average particle size of about 1000nm, a particle size distribution U of 1.0026, a molecular weight Mw of $3.52\times10^4$, and a BET specific surface area of 6.39$m^2$/g.

Preparation Example 2

Preparation of porogen A2

The mass percentages of the various components in the mixed C4 (from SINOPEC Beijing Yanshan Company, China) were as follows: 1,3-butadiene: 0.06%; trans-2-butene: 12.67%; isobutane: 37.09%; isobutene: 19.48%; cis-2-butene: 27.79%; 1-butene: 1.02%; others: 1.89%. 13.5kg of the mixed C4 having the above composition was introduced into a 200L reaction kettle containing an organic reaction liquid consisting of 10kg of maleic anhydride, 4kg of dibenzoyl peroxide and 100L of isoamyl acetate and subjected to free radical copolymerization reaction (the concentration of maleic anhydride in the organic solvent: 10.2wt%), wherein the copolymerization reaction pressure was 1MPa, the copolymerization reaction temperature was 80°C, and the copolymerization reaction time was 6h; the weight ratio of the maleic anhydride to the mixed C4 was 1:1.35.

The copolymerization reaction product was passed into a flash separator for gas-liquid separation under the conditions of 30°C and 0MPa. The obtained liquid-solid mixture was continued to be centrifuged in a centrifugal separator at 4000rad/min for 20 minutes for liquid-solid separation to obtain a solid product, and the liquid returned to the reaction kettle. The solid product was washed with hexane, and the filter cake obtained by suction filtration through a fritted glass funnel was vacuum dried at 90°C for 8 hours to obtain 20.5 kg of maleic anhydride-mixed C4 copolymer microspheres A2.

The maleic anhydride-mixed C4 copolymer microspheres A2 as the porogen was analyzed by $^1$H NMR to show that based on the total molar amount of the various structural units in the polymer, the molar content of the structural unit A from maleic anhydride was 49 mol%, the molar content of the structural unit B from mixed C4 was 51 mol%, wherein the conversion efficiency of mixed C4 calculated by gravimetric method was 55wt%.

The maleic anhydride-mixed C4 copolymer microspheres A2 had an average particle size of about 1200nm, a particle size distribution U of 1.0048, a molecular weight Mw of $3.06\times10^4$, and a BET specific surface area of 3.57$m^2$/g.

Preparation Example 3

Preparation of porogen A3

376.4g of maleic anhydride, 48.8g of azobisisobutyronitrile, 256.6g of styrene, 1.165L of acetone and 4.614L of hexane (the amount of hexane: 79.8vol%) were added into a 20L reaction kettle (wherein with respect to the polymerized monomers, the amount of maleic anhydride was 59.5wt%, and the amount of styrene was 40.5wt%). After the materials were mixed homogeneously (wherein in the homogeneous solution, the mass concentrations of maleic anhydride and styrene were 8.1wt% and 5.5wt%, respectively, and the mass concentration of the initiator was 1.1wt%), nitrogen was introduced for 20 minutes, and the temperature of the reaction kettle was raised to 70°C; the reaction was carried out for 8 hours. After the reaction was completed, the obtained polymer emulsion suspension was centrifuged via a centrifuge at a rotational speed of 2000rad/min for 20 minutes to obtain 493g of the maleic anhydride-styrene copolymer microspheres A3 as the porogen, wherein the corresponding polymerization yield was 78%.

The polymer microspheres were analyzed by $^1$H NMR to show that based on the total molar amount of the various structural units in the polymer, the molar content of the structural unit A from maleic anhydride was 48%, and the molar content of the structural unit B from styrene was 52%.

The maleic anhydride copolymer microspheres A3 as the porogen had an average particle size of about 1200nm, a particle size distribution U of 1.0034, a molecular weight Mw of $3.89\times10^4$, and a BET specific surface area of 5.67$m^2$/g.

Preparation Example 4

Preparation of porogen A4

262.6g of maleic anhydride, 51.3g of azobisisobutyronitrile, 235.1g of styrene, 1.253L of acetone and 4.614L of hexane (the amount of hexane: 78.6vol%) were added into a 20L reaction kettle (wherein with respect to the polymerized monomers, the amount of maleic anhydride was 52.8wt%, and the amount of styrene was 47.2wt%). After the materials were mixed homogeneously (wherein in the homogeneous solution, the mass concentrations of maleic anhydride and styrene were 5.7wt% and 5.1wt%, respectively, and the mass concentration of the initiator was 1.1wt%), nitrogen was introduced for 20 minutes, and the temperature of the reaction kettle was raised to 70°C and the reaction was carried out for 5 hours. After the reaction was completed, the obtained polymer emulsion suspension was centrifuged via a centrifuge at a rotational speed of 2000rad/min for 20 minutes to obtain 438g of the maleic anhydride copolymer microspheres A4 as the porogen, wherein the corresponding polymerization yield was 88%.

The copolymer microspheres were analyzed by $^1H$ NMR to show that based on the total molar amount of the various structural units in the polymer, the molar content of the structural unit A from maleic anhydride was 49%, and the molar content of the structural unit B from styrene was 51%.

The maleic anhydride copolymer microspheres A4 as the porogen had an average particle size of about 700nm, a particle size distribution U of 1.0038, a molecular weight Mw of $3.18\times10^4$, and a BET specific surface area of 7.98$m^2$/g.

Preparation Example 5

Preparation of porogen A5

124.6g of maleic anhydride, 51.3g of azobisisobutyronitrile, 129.9g of styrene, 2.307L of acetone and 2.645L of hexane (the amount of hexane: 53.4vol%) were added into a 20L reaction kettle (wherein with respect to the polymerized monomers, the amount of maleic anhydride was 49.0wt%, and the amount of styrene was 51.0wt%). After the materials were mixed homogeneously (wherein in the homogeneous solution, the mass concentrations of maleic anhydride and styrene were 3.2wt% and 3.4wt%, respectively, and the mass concentration of the initiator was 1.3wt%), nitrogen was introduced for 20 minutes, and the temperature of the reaction kettle was raised to 70°C and the reaction was carried out for 4 hours. After the reaction was completed, the obtained polymer emulsion suspension was centrifuged via a centrifuge at a rotational speed of 2000rad/min for 20 minutes to obtain 191g of the maleic anhydride copolymer microspheres A5 as the porogen, wherein the corresponding polymerization yield was 75%.

The copolymer microspheres were analyzed by $^1H$ NMR to show that based on the total molar amount of the various structural units in the polymer, the molar content of the structural unit A from maleic anhydride was 47%, and the molar content of the structural unit B from styrene was 53%.

The maleic anhydride copolymer microspheres A5 as the porogen had an average particle size of about 460nm, a particle size distribution U of 1.0098, a molecular weight Mw of $2.03\times10^4$, and a BET specific surface area of 9.67$m^2$/g.

Preparation Example 6

Preparation of porogen B1

In a 20L reaction kettle, 400g of maleic anhydride, 472g of $\alpha$-methyl styrene, 95g of divinylbenzene and 8g of azobisisobutyronitrile were dissolved in 4L of isoamyl acetate, and reacted for 5 hours at 0.1MPa and 70°C under a nitrogen atmosphere, wherein the amount of $\alpha$-methyl styrene was 97.9 mol, the amount of divinylbenzene was 17.9 mol, and the amount of the initiator was 1.2 mol relative to 100 mol of maleic anhydride. The system after reaction was centrifuged via a centrifuge at 5000 rad/min for 30 minutes to obtain cross-linked maleic anhydride-$\alpha$-methyl styrene copolymer microspheres B1, which were washed and purified with n-hexane and dried under vacuum.

The cross-linking degree of the cross-linked maleic anhydride-$\alpha$-methyl styrene copolymer microspheres B1 was 82%, the molar ratio of the structural unit A, the structural unit B and the cross-linking structural unit was 100:101:25, and the copolymer microspheres B1 had an average particle size of 1200nm, a particle size distribution U of 1.0134, and a BET specific surface area of 5.97$m^2$/g.

Preparation Example 7

Preparation of porogen B2

In a 20L reaction kettle, 400g of maleic anhydride, 472g of $\alpha$-methyl styrene, 104g of divinylbenzene and 8g

of azobisisobutyronitrile were dissolved in 4L of isoamyl acetate, and reacted for 5 hours at 0.1MPa and 70°C under a nitrogen atmosphere, wherein the amount of α-methyl styrene was 97.9 mol, the amount of divinylbenzene was 19.6 mol, and the amount of the initiator was 1.2 mol relative to 100 mol of maleic anhydride. The system after reaction was centrifuged via a centrifuge at 5000 rad/min for 30 minutes to obtain cross-linked maleic anhydride-α-methyl styrene copolymer microspheres B2, which were washed and purified with n-hexane and dried under vacuum.

The cross-linking degree of the cross-linked maleic anhydride-α-methyl styrene copolymer microspheres B2 was 84%, the molar ratio of the structural unit A, the structural unit B and the cross-linking structural unit was 100:101:28, and the copolymer microspheres B2 had an average particle size of 900nm, a particle size distribution U of 1.0228, and a BET specific surface area of 6.58$m^2$/g.

Preparation Example 8

Preparation of porogen B3

In a 20L reaction kettle, 1000g of maleic anhydride, 1200g of α-methyl styrene, 200g of divinylbenzene and 20g of azobisisobutyronitrile were dissolved in 10L of isoamyl acetate, and reacted for 5 hours at 0.1MPa and 70°C under a nitrogen atmosphere, wherein the amount of α-methyl styrene was 99.6 mol, the amount of divinylbenzene was 15.1 mol, and the amount of the initiator was 1.2 mol relative to 100 mol of maleic anhydride. The system after reaction was centrifuged via a centrifuge at 5000 rad/min for 30 minutes to obtain cross-linked maleic anhydride-α-methyl styrene copolymer microspheres B3, which were washed and purified with n-hexane and dried under vacuum.

The cross-linking degree of the cross-linked maleic anhydride-α-methyl styrene copolymer microspheres B3 was 70%, the molar ratio of the structural unit A, the structural unit B and the cross-linking structural unit was 100:101:23, and the copolymer microspheres B3 had an average particle size of 1500nm, a particle size distribution U of 1.0304, and a BET specific surface area of 4.94$m^2$/g.

Preparation Example 9

Preparation of porogen B4

The gas composition of mixed butenes (from SINOPEC Beijing Yanshan Company, China) was as follows: trans-2-butene: 40.83 wt%; cis-2-butene: 18.18 wt%; n-butane: 24.29 wt%; n-butene: 9.52 wt%; isobutene: 2.78 wt%; and others: 4.4 wt%. In a 20L reaction kettle, the metered mixed butenes (the molar ratio of maleic anhydride to the effective components (terminal olefins) in the mixed olefins: 1:1) were introduced into 1L of an isoamyl acetate solution containing maleic anhydride in a concentration of 1mol/L, azobisisobutyronitrile of 0.05 mol/L and divinylbenzene of 0.2 mol/L under a nitrogen atmosphere (wherein relative to 100 mol of maleic anhydride, the amount of the mixed butenes (effective components) was 100 mol, the amount of divinylbenzene was 20 mol, and the amount of the initiator was 5 mol), and charged with nitrogen and pressurized to a relative pressure of 0.5 MPa; and the system was reacted at 70°C for 6 hours. The system after reaction was centrifuged via a centrifuge at 5000 rad/min for 30 minutes to obtain cross-linked mixed butenes-maleic anhydride copolymer microspheres B4, which were washed and purified with n-hexane and dried under vacuum.

The cross-linking degree of the cross-linked mixed C4-maleic anhydride copolymer microspheres B4 was 76%, and the molar ratio of the structural unit A, the structural unit B and the cross-linking structural unit was 100:100:25. The copolymer microspheres B4 had an average particle size of 1100nm, a particle size distribution U of 1.0415, and a BET specific surface area of 3.46$m^2$/g.

Preparation Example 10

Preparation of porogen B5

Cross-linked copolymer microspheres were prepared according to the method of Preparation Example 1, except that the amount of divinylbenzene was 155 g, thereby cross-linked maleic anhydride-α-methyl styrene copolymer microspheres B5 were obtained. Therein, relative to 100 mol of maleic anhydride, the amount of α-methyl styrene was 97.9 mol, the amount of divinylbenzene was 29.2 mol, and the amount of the initiator was 1.2 mol.

The cross-linking degree of the cross-linked maleic anhydride-α-methyl styrene copolymer microspheres B5 was 89%, the molar ratio of the structural unit A, the structural unit B and the cross-linking structural unit was 100:102:31, and the copolymer microspheres B5 had an average particle size of 400nm, a particle size distribution U of 1.0676, and a BET specific surface area of 9.14$m^2$/g.

Preparation Example 11

Preparation of porogen B6

In a 20L reaction kettle, 600g of maleic anhydride, 722g of α-methyl styrene, 110g of divinylbenzene and 12g of azobisisobutyronitrile were dissolved in 6L of isoamyl acetate, and reacted for 5 hours at 0.1MPa and 70°C under a nitrogen atmosphere, wherein the amount of α-methyl styrene was 99.8 mol, the amount of divinylbenzene was 13.8 mol, and the amount of the initiator was 1.2 mol relative to 100 mol of maleic anhydride. The system after reaction was centrifuged via a centrifuge at 5000 rad/min for 30 minutes to obtain cross-linked maleic anhydride-α-methyl styrene copolymer microspheres B6, which were washed and purified with n-hexane and dried under vacuum.

The cross-linking degree of the cross-linked maleic anhydride-α-methyl styrene copolymer microspheres B6 was 67%, the molar ratio of the structural unit A, the structural unit B and the cross-linking structural unit was 100:101:19, and the copolymer microspheres B6 had an average particle size of 2150nm, a particle size distribution U of 1.0688, and a BET specific surface area of 4.02$m^2$/g.

Preparation of polyethylene compositions

Example I-1

90 parts by weight of a linear low-density polyethylene (MFR of 3.5g/10min, density of 0.917g/$cm^3$, and molecular weight distribution of 4; M2330 from ZhongKe (Guangdong) Refinery & Petrochemical Co. Ltd., China), 10 parts by weight of a low-density polyethylene (MFR of 7.5g/10min, density of 0.919g/$cm^3$, and molecular weight distribution of 7.2; 1C7A from SINOPEC Beijing Yanshan Company, China), 70 parts by weight of the porogen A1 and 1 part by weight of an antioxidant composite additive were blended in a high-speed mixer, wherein the antioxidant composite additive was a mixture of pentaerythritol tetrakis(β-(3,5-di-tert-butyl-4-hydroxyphenyl)propionate), tris(2,4-di-tert-butylphenyl)phosphite and calcium stearate in a weight ratio of 2:2:1.

After being mixed homogeneously, the resultant was added to a twin-screw extruder for melt blending, extrusion and pelletization, with the rotational speed of the screw being 200r/min, and the temperatures of the feed section, melting section, homogenizing section and die being: 170°C, 180°C, 200°C and 190°C respectively, thereby a polyethylene composition was obtained. The prepared polyethylene composition was dried. The properties of the polyethylene composition are shown in Table 1. The polyethylene composition was molten at 200°C and pressed into a sheet, wherein the sample sheet had a thickness of 120-160 μm. Fig. 1 is an SEM photograph of the cross-section of the sample sheet of the polyethylene composition. It can be seen from Fig. 1 that the porogen had uniform particle size (wherein the size of the porogen in the polyethylene composition was close to the size of the porogen itself) and was uniformly distributed in the polyethylene matrix.

Example I-2

99 parts by weight of a linear low-density polyethylene (MFR of 3.5g/10min, density of 0.927g/$cm^3$, and molecular weight distribution of 2.7; M2735 from ZhongKe (Guangdong) Refinery & Petrochemical Co. Ltd., China), 70 parts by weight of the porogen A1 and 1 part by weight of an antioxidant composite additive were blended in a high-speed mixer, wherein the antioxidant composite additive was a mixture of pentaerythritol tetrakis(β-(3,5-di-tert-butyl-4-hydroxyphenyl)propionate), tris(2,4-di-tert-butylphenyl)phosphite and calcium stearate in a weight ratio of 2:2:1.

After being mixed homogeneously, the resultant was added to a twin-screw extruder for melt blending, extrusion and pelletization, with the rotational speed of the screw being 200r/min, and the temperatures of the feed section, melting section, homogenizing section and die being: 170°C, 180°C, 200°C and 190°C respectively, thereby a polyethylene composition was obtained. The prepared polyethylene composition was dried. The properties of the polyethylene composition are shown in Table 1. The polyethylene composition was molten at 200°C and pressed into a sheet, wherein the sample sheet had a thickness of 120-160 μm.

Example I-3

90 parts by weight of a linear low-density polyethylene (MFR of 3.5g/10min, density of 0.917g/$cm^3$, and molecular weight distribution of 4; M2330 from ZhongKe (Guangdong) Refinery & Petrochemical Co. Ltd., China), 10 parts by weight of a low-density polyethylene (MFR of 7.5g/10min, density of 0.919g/$cm^3$, and molecular weight distribution of 7.2; 1C7A from SINOPEC Beijing Yanshan Company, China), 100 parts by weight of the porogen A1 and 1 part by weight of an antioxidant composite additive were blended in a high-speed mixer, wherein the antioxidant composite additive was a mixture of pentaerythritol tetrakis(β-(3,5-di-tert-butyl-4-hydroxyphenyl)propionate), tris(2,4-di-tert-butylphenyl)phosphite and calcium stearate in a weight ratio of 2:2:1.

After being mixed homogeneously, the resultant was added to a twin-screw extruder for melt blending, extrusion and pelletization, with the rotational speed of the screw being 200r/min, and the temperatures of the feed section, melting section, homogenizing section and die being: 170°C, 180°C, 200°C and 190°C respectively, thereby a polyethylene composition was obtained. The prepared polyethylene composition was dried. The properties of the polyethylene composition are shown in Table 1. The polyethylene composition was molten at 200°C and pressed into a sheet, wherein the sample sheet had a thickness of 120-160 μm. Fig. 2 is an SEM photograph of the cross-section of the sample sheet of the polyethylene composition. It can be seen from Fig. 2 that the porogen had uniform particle size and was uniformly distributed in the polyethylene matrix.

Example I-4

75 parts by weight of a linear low-density polyethylene (MFR of 3.5g/10min, density of 0.917g/$cm^3$, and molecular weight distribution of 4; M2330 from ZhongKe (Guangdong) Refinery & Petrochemical Co. Ltd., China), 25 parts by weight of a low-density polyethylene (MFR of 7.5g/10min, density of 0.919g/$cm^3$, and molecular weight distribution of 7.2; 1C7A from SINOPEC Beijing Yanshan Company, China), 85 parts by weight of the porogen A2 and 1 part by weight of an antioxidant composite additive were blended in a high-speed mixer, wherein the antioxidant composite additive was a mixture of pentaerythritol tetrakis(β-(3,5-di-tert-butyl-4-hydroxyphenyl)propionate), tris(2,4-di-tert-butylphenyl)phosphite and calcium stearate in a weight ratio of 2:2:1.

After being mixed homogeneously, the resultant was added to a twin-screw extruder for melt blending, extrusion and pelletization, with the rotational speed of the screw being 200r/min, and the temperatures of the feed section, melting section, homogenizing section and die being: 170°C, 180°C, 200°C and 190°C respectively, thereby a polyethylene composition was obtained. The prepared polyethylene composition was dried. The properties of the polyethylene composition are shown in Table 1.

Example I-5

75 parts by weight of a linear low-density polyethylene (MFR of 3.5g/10min, density of 0.917g/$cm^3$, and molecular weight distribution of 4; M2330 from ZhongKe (Guangdong) Refinery & Petrochemical Co. Ltd., China), 25 parts by weight of a low-density polyethylene (MFR of 7.5g/10min, density of 0.919g/$cm^3$, and molecular weight distribution of 7.2; 1C7A from SINOPEC Beijing Yanshan Company, China), 100 parts by weight of the porogen A3 and 1 part by weight of an antioxidant composite additive were blended in a high-speed mixer, wherein the antioxidant composite additive was a mixture of pentaerythritol tetrakis(β-(3,5-di-tert-butyl-4-hydroxyphenyl)propionate), tris(2,4-di-tert-butylphenyl)phosphite and calcium stearate in a weight ratio of 2:2:1.

After being mixed homogeneously, the resultant was added to a twin-screw extruder for melt blending, extrusion and pelletization, with the rotational speed of the screw being 200r/min, and the temperatures of the feed section, melting section, homogenizing section and die being: 170°C, 180°C, 200°C and 190°C respectively, thereby a polyethylene composition was obtained. The prepared polyethylene composition was dried. The properties of the polyethylene composition are shown in Table 1. The polyethylene composition was molten at 200°C and pressed into a sheet, wherein the sample sheet had a thickness of 120-160 μm. Fig. 3 is an SEM photograph of the cross-section of the sample sheet of the polyethylene composition. It can be seen from Fig. 3 that the porogen had uniform particle size and was uniformly distributed in the polyethylene matrix.

Example I-6

90 parts by weight of a linear low-density polyethylene (MFR of 3.5g/10min, density of 0.917g/$cm^3$, and molecular weight distribution of 4; M2330 from ZhongKe (Guangdong) Refinery & Petrochemical Co. Ltd., China), 10 parts by weight of a low-density polyethylene (MFR of 7.5g/10min, density of 0.919g/$cm^3$, and molecular weight distribution of 7.2; 1C7A from SINOPEC Beijing Yanshan Company, China), 45 parts by weight of the porogen A4 and 1 part by weight of an antioxidant composite additive were blended in a high-speed mixer, wherein the antioxidant composite additive was a mixture of pentaerythritol tetrakis(β-(3,5-di-tert-butyl-4-hydroxyphenyl)propionate), tris(2,4-di-tert-butylphenyl)phosphite and calcium stearate in a weight ratio of 2:2:1.

After being mixed homogeneously, the resultant was added to a twin-screw extruder for melt blending, extrusion and pelletization, with the rotational speed of the screw being 200r/min, and the temperatures of the feed section, melting section, homogenizing section and die being: 170°C, 180°C, 200°C and 190°C respectively, thereby a polyethylene composition was obtained. The prepared polyethylene composition was dried. The properties of the polyethylene composition are shown in Table 1. The polyethylene composition was molten at 200°C and pressed into a sheet, wherein the sample sheet had a thickness of 120-160 μm. Fig. 4 is an SEM photograph of the cross-section of the sample sheet

of the polyethylene composition. It can be seen from Fig. 4 that the porogen had uniform particle size and was uniformly distributed in the polyethylene matrix.

Example I-7

90 parts by weight of a linear low-density polyethylene (MFR of 3.5g/10min, density of 0.917g/$cm^3$, and molecular weight distribution of 4; M2330 from ZhongKe (Guangdong) Refinery & Petrochemical Co. Ltd., China), 10 parts by weight of a low-density polyethylene (MFR of 7.5g/10min, density of 0.919g/$cm^3$, and molecular weight distribution of 7.2; 1C7A from SINOPEC Beijing Yanshan Company, China), 70 parts by weight of the porogen A1 and 1 part by weight of an antioxidant composite additive were blended in a high-speed mixer, wherein the antioxidant composite additive was a mixture of pentaerythritol tetrakis(β-(3,5-di-tert-butyl-4-hydroxyphenyl)propionate) and calcium stearate in a weight ratio of 4:1.

After being mixed homogeneously, the resultant was added to a twin-screw extruder for melt blending, extrusion and pelletization, with the rotational speed of the screw being 200r/min, and the temperatures of the feed section, melting section, homogenizing section and die being: 170°C, 180°C, 200°C and 190°C respectively, thereby a polyethylene composition was obtained. The prepared polyethylene composition was dried. The properties of the polyethylene composition are shown in Table 1.

Comparative Example I-1

90 parts by weight of a linear low-density polyethylene (MFR of 3.5g/10min, density of 0.917g/$cm^3$, and molecular weight distribution of 4; M2330 from ZhongKe (Guangdong) Refinery & Petrochemical Co. Ltd.), 10 parts by weight of a low-density polyethylene (MFR of 7.5g/10min, density of 0.919g/$cm^3$, and molecular weight distribution of 7.2; 1C7A from Sinopec Yanshan Petrochemical Company, China), 25 parts by weight of the porogen A1 and 1 part by weight of an antioxidant composite additive were blended in a high-speed mixer, wherein the antioxidant composite additive was a mixture of pentaerythritol tetrakis(β-(3,5-di-tert-butyl-4-hydroxyphenyl)propionate), tris(2,4-di-tert-butylphenyl)phosphite and calcium stearate in a weight ratio of 2:2:1.

After being mixed homogeneously, the resultant was added to a twin-screw extruder for melt blending, extrusion and pelletization, with the rotational speed of the screw being 200r/min, and the temperatures of the feed section, melting section, homogenizing section and die being: 170°C, 180°C, 200°C and 190°C respectively, thereby a polyethylene composition was obtained. The prepared polyethylene composition was dried. The properties of the polyethylene composition are shown in Table 1. The polyethylene composition was molten at 200°C and pressed into a sheet, wherein the sample sheet had a thickness of 120-160 μm. Fig. 5 is an SEM photograph of the cross-section of the sample sheet of the polyethylene composition. It can be seen from Fig. 5 that the porogen had uniform particle size, but was less in quantity, and was non-uniformly distributed.

Comparative Example I-2

90 parts by weight of a linear low-density polyethylene (MFR of 3.5g/10min, density of 0.917g/$cm^3$, and molecular weight distribution of 4; M2330 from ZhongKe (Guangdong) Refinery & Petrochemical Co. Ltd., China), 10 parts by weight of a low-density polyethylene (MFR of 7.5g/10min, density of 0.919g/$cm^3$, and molecular weight distribution of 7.2; 1C7A from SINOPEC Beijing Yanshan Company, China), 100 parts by weight of a nano CaCOs powder (Shanghai Yuanjiang Chemical Co., Ltd., China, 10000 meshes, BET specific surface area of 4.41$m^2$/g) and 1 part by weight of an antioxidant composite additive were blended in a high-speed mixer, wherein the antioxidant composite additive was a mixture of pentaerythritol tetrakis(β-(3,5-di-tert-butyl-4-hydroxyphenyl)propionate), tris(2,4-di-tert-butylphenyl)phosphite and calcium stearate in a weight ratio of 2:2:1.

After being mixed homogeneously, the resultant was added to a twin-screw extruder for melt blending, extrusion and pelletization, with the rotational speed of the screw being 200r/min, and the temperatures of the feed section, melting section, homogenizing section and die being: 170°C, 180°C, 200°C and 190°C respectively, thereby a polyethylene composition was obtained. The prepared polyethylene composition was dried. The properties of the polyethylene composition are shown in Table 1. The polyethylene composition was molten at 200°C and pressed into a sheet, wherein the sample sheet had a thickness of 120-160 μm. Fig. 6 is an SEM photograph of the cross-section of the sample sheet of the polyethylene composition. It can be seen from Fig. 6 that the porogen appeared to be significantly agglomerated.

Comparative Example I-3

90 parts by weight of a linear low-density polyethylene (MFR of 3.5g/10min, density of 0.917g/$cm^3$, and molecular weight distribution of 4; M2330 from ZhongKe (Guangdong) Refinery & Petrochemical Co. Ltd., China), 10 parts by

weight of a low-density polyethylene (MFR of 7.5g/10min, density of 0.919g/$cm^3$, and molecular weight distribution of 7.2; 1C7A from SINOPEC Beijing Yanshan Company, China), 100 parts by weight of a nano $BaSO_4$ powder (Sachtleben, Blanc Fixe Micro, organic coated, d50=0.7 μm, BET specific surface area of 3.55$m^2$/g) and 1 part by weight of an antioxidant composite additive were blended in a high-speed mixer, wherein the antioxidant composite additive was a mixture of pentaerythritol tetrakis(β-(3,5-di-tert-butyl-4-hydroxyphenyl)propionate), tris(2,4-di-tert-butylphenyl)phosphite and calcium stearate in a weight ratio of 2:2:1.

After being mixed homogeneously, the resultant was added to a twin-screw extruder for melt blending, extrusion and pelletization, with the rotational speed of the screw being 200r/min, and the temperatures of the feed section, melting section, homogenizing section and die being: 170°C, 180°C, 200°C and 190°C respectively, thereby a polyethylene composition was obtained. The prepared polyethylene composition was dried. The properties of the polyethylene composition are shown in Table 1. The polyethylene composition was molten at 200°C and pressed into a sheet, wherein the sample sheet had a thickness of 120-160 μm. Fig. 7 is an SEM photograph of the cross-section of the sample sheet of the polyethylene composition. It can be seen from the figure that the porogen appeared to be significantly agglomerated.

Comparative Example I-4

90 parts by weight of a linear low-density polyethylene (MFR of 3.5g/10min, density of 0.917g/$cm^3$, and molecular weight distribution of 4; M2330 from ZhongKe (Guangdong) Refinery & Petrochemical Co. Ltd., China), 10 parts by weight of a low-density polyethylene (MFR of 7.5g/10min, density of 0.919g/$cm^3$, and molecular weight distribution of 7.2; 1C7A from SINOPEC Beijing Yanshan Company, China), 140 parts by weight of the porogen A1 and 1 part by weight of an antioxidant composite additive were blended in a high-speed mixer, wherein the antioxidant composite additive was a mixture of pentaerythritol tetrakis(β-(3,5-di-tert-butyl-4-hydroxyphenyl)propionate), tris(2,4-di-tert-butylphenyl)phosphite and calcium stearate in a weight ratio of 2:2:1.

After being mixed homogeneously, the resultant was added to a twin-screw extruder for melt blending, extrusion and pelletization, with the rotational speed of the screw being 200r/min, and the temperatures of the feed section, melting section, homogenizing section and die being: 170°C, 180°C, 200°C and 190°C respectively, thereby a polyethylene composition was obtained. The prepared polyethylene composition was dried. The properties of the polyethylene composition are shown in Table 1.

Comparative Example I-5

90 parts by weight of a linear low-density polyethylene (MFR of 3.5g/10min, density of 0.917g/$cm^3$, and molecular weight distribution of 4; M2330 from ZhongKe (Guangdong) Refinery & Petrochemical Co. Ltd., China), 10 parts by weight of a low-density polyethylene (MFR of 7.5g/10min, density of 0.919g/$cm^3$, and molecular weight distribution of 7.2; 1C7A from SINOPEC Beijing Yanshan Company, China), 70 parts by weight of the porogen A5 and 1 part by weight of an antioxidant composite additive were blended in a high-speed mixer, wherein the antioxidant composite additive was a mixture of pentaerythritol tetrakis(β-(3,5-di-tert-butyl-4-hydroxyphenyl)propionate), tris(2,4-di-tert-butylphenyl)phosphite and calcium stearate in a weight ratio of 2:2:1.

After being mixed homogeneously, the resultant was added to a twin-screw extruder for melt blending, extrusion and pelletization, with the rotational speed of the screw being 200r/min, and the temperatures of the feed section, melting section, homogenizing section and die being: 170°C, 180°C, 200°C and 190°C respectively, thereby a polyethylene composition was obtained. The prepared polyethylene composition was dried. The properties of the polyethylene composition are shown in Table 1.

Comparative Example I-6

90 parts by weight of a linear low-density polyethylene (MFR of 3.5g/10min, density of 0.917g/$cm^3$, and molecular weight distribution of 4; M2330 from ZhongKe (Guangdong) Refinery & Petrochemical Co. Ltd., China), 10 parts by weight of a low-density polyethylene (MFR of 7.5g/10min, density of 0.919g/$cm^3$, and molecular weight distribution of 7.2; 1C7A from SINOPEC Beijing Yanshan Company, China), 70 parts by weight of a cross-linked starch (National 4302 from Ingredion Food Ingredients Co., Ltd.) and 1 part by weight of an antioxidant composite additive were blended in a high-speed mixer, wherein the antioxidant composite additive was a mixture of pentaerythritol tetrakis(β-(3,5-di-tert-butyl-4-hydroxyphenyl)propionate), tris(2,4-di-tert-butylphenyl)phosphite and calcium stearate in a weight ratio of 2:2:1.

After being mixed homogeneously, the resultant was added to a twin-screw extruder for melt blending, extrusion and pelletization, with the rotational speed of the screw being 200r/min, and the temperatures of the feed section, melting section, homogenizing section and die being: 170°C, 180°C, 200°C and 190°C respectively, thereby a polyethylene composition was obtained. The prepared polyethylene composition was dried. The properties of the polyethylene composition are shown in Table 1.

Example II-1

90 parts by weight of a linear low-density polyethylene (MFR of 3.5g/10min, density of 0.917g/cm$^3$, and molecular weight distribution of 4; M2330 from ZhongKe (Guangdong) Refinery & Petrochemical Co. Ltd., China), 10 parts by weight of a low-density polyethylene (MFR of 7.5g/10min, density of 0.919g/cm$^3$, and molecular weight distribution of 7.2; 1C7A from SINOPEC Beijing Yanshan Company, China), 70 parts by weight of the porogen B1 and 1 part by weight of an antioxidant composite additive were blended in a high-speed mixer, wherein the antioxidant composite additive was a mixture of pentaerythritol tetrakis(β-(3,5-di-tert-butyl-4-hydroxyphenyl)propionate), tris(2,4-di-tert-butylphenyl)phosphite and calcium stearate in a weight ratio of 2:2:1.

After being mixed homogeneously, the resultant was added to a twin-screw extruder for melt blending, extrusion and pelletization, with the rotational speed of the screw being 200r/min, and the temperatures of the feed section, melting section, homogenizing section and die being: 170°C, 180°C, 200°C and 190°C respectively, thereby a polyethylene composition was obtained. The prepared polyethylene composition was dried. The properties of the polyethylene composition are shown in Table 1. The polyethylene composition was molten at 200°C and pressed into a sheet, wherein the sample sheet had a thickness of 160-200 μm. Fig. 8 is an SEM photograph of the cross-section of the sample sheet of the polyethylene composition. It can be seen from the figure that the porogen had uniform particle size and was uniformly distributed in the polyethylene matrix.

Example II-2

82 parts by weight of a linear low-density polyethylene (MFR of 3.5g/10min, density of 0.917g/cm$^3$, and molecular weight distribution of 4; M2330 from ZhongKe (Guangdong) Refinery & Petrochemical Co. Ltd., China), 10 parts by weight of a low-density polyethylene (MFR of 7.5g/10min, density of 0.919g/cm$^3$, and molecular weight distribution of 7.2; 1C7A from SINOPEC Beijing Yanshan Company, China), 8 parts by weight of a random copolymerized polypropylene (MFR of 2.5g/10min, and molecular weight distribution of 4.9; GM250E from Sinopec Shanghai Petrochemical Co., Ltd., China), 70 parts by weight of the porogen B1 and 1 part by weight of an antioxidant composite additive were blended in a high-speed mixer, wherein the antioxidant composite additive was a mixture of pentaerythritol tetrakis(β-(3,5-di-tert-butyl-4-hydroxyphenyl)propionate), tris(2,4-di-tert-butylphenyl)phosphite and calcium stearate in a weight ratio of 2:2:1.

After being mixed homogeneously, the resultant was added to a twin-screw extruder for melt blending, extrusion and pelletization, with the rotational speed of the screw being 200r/min, and the temperatures of the feed section, melting section, homogenizing section and die being: 170°C, 180°C, 200°C and 190°C respectively, thereby a polyethylene composition was obtained. The prepared polyethylene composition was dried. The properties of the polyethylene composition are shown in Table 1.

Example II-3

90 parts by weight of a linear low-density polyethylene (MFR of 3.5g/10min, density of 0.917g/cm$^3$, and molecular weight distribution of 4; M2330 from ZhongKe (Guangdong) Refinery & Petrochemical Co. Ltd., China), 10 parts by weight of a low-density polyethylene (MFR of 7.5g/10min, density of 0.919g/cm$^3$, and molecular weight distribution of 7.2; 1C7A from SINOPEC Beijing Yanshan Company, China), 30 parts by weight of the porogen B2 and 1 part by weight of an antioxidant composite additive were blended in a high-speed mixer, wherein the antioxidant composite additive was a mixture of pentaerythritol tetrakis(β-(3,5-di-tert-butyl-4-hydroxyphenyl)propionate), tris(2,4-di-tert-butylphenyl)phosphite and calcium stearate in a weight ratio of 2:2:1.

After being mixed homogeneously, the resultant was added to a twin-screw extruder for melt blending, extrusion and pelletization, with the rotational speed of the screw being 200r/min, and the temperatures of the feed section, melting section, homogenizing section and die being: 170°C, 180°C, 200°C and 190°C respectively, thereby a polyethylene composition was obtained. The prepared polyethylene composition was dried. The properties of the polyethylene composition are shown in Table 1. The polyethylene composition was molten at 200°C and pressed into a sheet, wherein the sample sheet had a thickness of 160-200 μm. Fig. 9 is an SEM photograph of the cross-section of the sample sheet of the polyethylene composition. It can be seen from the figure that the porogen had uniform particle size and was uniformly distributed in the polyethylene matrix.

Example II-4

75 parts by weight of a linear low-density polyethylene (MFR of 3.5g/10min, density of 0.917g/cm$^3$, and molecular weight distribution of 4; M2330 from ZhongKe (Guangdong) Refinery & Petrochemical Co. Ltd., China), 25 parts by weight of a low-density polyethylene (MFR of 7.5g/10min, density of 0.919g/cm$^3$, and molecular weight distribution of 7.2; 1C7A from SINOPEC Beijing Yanshan Company, China), 50 parts by weight of the porogen B3 and 1 part by weight

of an antioxidant composite additive were blended in a high-speed mixer, wherein the antioxidant composite additive was a mixture of pentaerythritol tetrakis(β-(3,5-di-tert-butyl-4-hydroxyphenyl)propionate), tris(2,4-di-tert-butylphenyl)phosphite and calcium stearate in a weight ratio of 2:2:1.

After being mixed homogeneously, the resultant was added to a twin-screw extruder for melt blending, extrusion and pelletization, with the rotational speed of the screw being 200r/min, and the temperatures of the feed section, melting section, homogenizing section and die being: 170°C, 180°C, 200°C and 190°C respectively, thereby a polyethylene composition was obtained. The prepared polyethylene composition was dried. The properties of the polyethylene composition are shown in Table 1. The polyethylene composition was molten at 200°C and pressed into a sheet, wherein the sample sheet had a thickness of 160-200 μm. Fig. 10 is an SEM photograph of the cross-section of the sample sheet of the polyethylene composition. It can be seen from the figure that the porogen had uniform particle size and was uniformly distributed in the polyethylene matrix.

Example II-5

90 parts by weight of a linear low-density polyethylene (MFR of 3.5g/10min, density of 0.917g/cm$^3$, and molecular weight distribution of 4; M2330 from ZhongKe (Guangdong) Refinery & Petrochemical Co. Ltd., China), 10 parts by weight of a low-density polyethylene (MFR of 7.5g/10min, density of 0.919g/cm$^3$, and molecular weight distribution of 7.2; 1C7A from SINOPEC Beijing Yanshan Company, China), 90 parts by weight of the porogen B4 and 1 part by weight of an antioxidant composite additive were blended in a high-speed mixer, wherein the antioxidant composite additive was a mixture of pentaerythritol tetrakis(β-(3,5-di-tert-butyl-4-hydroxyphenyl)propionate), tris(2,4-di-tert-butylphenyl)phosphite and calcium stearate in a weight ratio of 2:2:1.

After being mixed homogeneously, the resultant was added to a twin-screw extruder for melt blending, extrusion and pelletization, with the rotational speed of the screw being 200r/min, and the temperatures of the feed section, melting section, homogenizing section and die being: 170°C, 180°C, 200°C and 190°C respectively, thereby a polyethylene composition was obtained. The prepared polyethylene composition was dried. The properties of the polyethylene composition are shown in Table 1.

Example II-6

90 parts by weight of a linear low-density polyethylene (MFR of 3.5g/10min, density of 0.917g/cm$^3$, and molecular weight distribution of 4; M2330 from ZhongKe (Guangdong) Refinery & Petrochemical Co. Ltd., China), 10 parts by weight of a low-density polyethylene (MFR of 7.5g/10min, density of 0.919g/cm$^3$, and molecular weight distribution of 7.2; 1C7A from SINOPEC Beijing Yanshan Company, China), 100 parts by weight of the porogen B1 and 1 part by weight of an antioxidant composite additive were blended in a high-speed mixer, wherein the antioxidant composite additive was a mixture of pentaerythritol tetrakis(β-(3,5-di-tert-butyl-4-hydroxyphenyl)propionate), tris(2,4-di-tert-butylphenyl)phosphite and calcium stearate in a weight ratio of 2:2:1.

After being mixed homogeneously, the resultant was added to a twin-screw extruder for melt blending, extrusion and pelletization, with the rotational speed of the screw being 200r/min, and the temperatures of the feed section, melting section, homogenizing section and die being: 170°C, 180°C, 200°C and 190°C respectively, thereby a polyethylene composition was obtained. The prepared polyethylene composition was dried. The properties of the polyethylene composition are shown in Table 1. The polyethylene composition was molten at 200°C and pressed into a sheet, wherein the sample sheet had a thickness of 160-200 μm. Fig. 11 is an SEM photograph of the cross-section of the sample sheet of the polyethylene composition. It can be seen from the figure that the porogen had uniform particle size and was uniformly distributed in the polyethylene matrix.

Comparative Example II-1

A polyethylene composition was prepared according to the method of Example II-1, except that the porogen B1 was 15 parts by weight. The properties of the polyethylene composition are shown in Table 1. Fig. 12 is an SEM photograph of the cross-section of the sample sheet of the polyethylene composition. It can be seen from Fig. 12 that the porogen had uniform particle size, but was less in quantity, and was non-uniformly distributed.

Comparative Example II-2

90 parts by weight of a linear low-density polyethylene (MFR of 3.5g/10min, density of 0.917g/cm$^3$, and molecular weight distribution of 4; M2330 from ZhongKe (Guangdong) Refinery & Petrochemical Co. Ltd., China), 10 parts by weight of a low-density polyethylene (MFR of 7.5g/10min, density of 0.919g/cm$^3$, and molecular weight distribution of 7.2; 1C7A from SINOPEC Beijing Yanshan Company, China), 100 parts by weight of a nano CaCOs powder (Shanghai

Yuanjiang Chemical Co., Ltd., China, 10000 meshes) and 1 part by weight of an antioxidant composite additive were blended in a high-speed mixer, wherein the antioxidant composite additive was a mixture of pentaerythritol tetrakis(β-(3,5-di-tert-butyl-4-hydroxyphenyl)propionate), tris(2,4-di-tert-butylphenyl)phosphite and calcium stearate in a weight ratio of 2:2:1.

After being mixed homogeneously, the resultant was added to a twin-screw extruder for melt blending, extrusion and pelletization, with the rotational speed of the screw being 200r/min, and the temperatures of the feed section, melting section, homogenizing section and die being: 170°C, 180°C, 200°C and 190°C respectively, thereby a polyethylene composition was obtained. The prepared polyethylene composition was dried. The properties of the polyethylene composition are shown in Table 1. The polyethylene composition was molten at 200°C and pressed into a sheet, wherein the sample sheet had a thickness of 160-200 μm. Fig. 13 is an SEM photograph of the cross-section of the sample sheet of the polyethylene composition. It can be seen from the figure that the porogen appeared to be significantly agglomerated.

Comparative Example II-3

90 parts by weight of a linear low-density polyethylene (MFR of 3.5g/10min, density of 0.917g/cm$^3$, and molecular weight distribution of 4; M2330 from ZhongKe (Guangdong) Refinery & Petrochemical Co. Ltd., China), 10 parts by weight of a low-density polyethylene (MFR of 7.5g/10min, density of 0.919g/cm$^3$, and molecular weight distribution of 7.2; 1C7A from SINOPEC Beijing Yanshan Company, China), 100 parts by weight of a nano $BaSO_4$ powder (Sachtleben, Blanc Fixe Micro, organic coated, d50=0.7 μm) and 1 part by weight of an antioxidant composite additive were blended in a high-speed mixer, wherein the antioxidant composite additive was a mixture of pentaerythritol tetrakis(β-(3,5-di-tert-butyl-4-hydroxyphenyl)propionate), tris(2,4-di-tert-butylphenyl)phosphite and calcium stearate in a weight ratio of 2:2:1.

After being mixed homogeneously, the resultant was added to a twin-screw extruder for melt blending, extrusion and pelletization, with the rotational speed of the screw being 200r/min, and the temperatures of the feed section, melting section, homogenizing section and die being: 170°C, 180°C, 200°C and 190°C respectively, thereby a polyethylene composition was obtained. The prepared polyethylene composition was dried. The properties of the polyethylene composition are shown in Table 1. The polyethylene composition was molten at 200°C and pressed into a film, which had a thickness of 160-200 μm. Fig. 14 is an SEM photograph of the cross-section of the sample sheet of the polyethylene composition. It can be seen from the figure that the porogen appeared to be significantly agglomerated.

Comparative Example II-4

A polyethylene composition was prepared according to the method of Example II-1, except that the porogen B1 was 135 parts by weight. The properties of the polyethylene composition are shown in Table 1.

Comparative Example II-5

A polyethylene composition was prepared according to the method of Example II-1, except that the porogen used was porogen B5. The properties of the polyethylene composition are shown in Table 1.

Comparative Example II-6

A polyethylene composition was prepared according to the method of Example II-1, except that the porogen used was porogen B6. The properties of the polyethylene composition are shown in Table 1.

Table 1

| Items | MFR (g/ 10min) | $\rho_{composition}$- $\rho_{PE}$ (g/cm$^3$) | $T_C$ (°C) | $T_m$ (°C) | $\Delta H_{m\ PE}$- $\Delta H_{m\text{-}composition}$ (J/g) | Tensile strength at break (MPa) | Elongation at break (%) |
|---|---|---|---|---|---|---|---|
| Example I-1 | 2.26 | 0.113 | 105.1 | 120.6 | 31.1 | 18.1 | 460 |
| Example I-2 | 1.95 | 0.118 | 106.9 | 119.3 | 33.5 | 19.4 | 480 |
| Example I-3 | 2.05 | 0.138 | 104.6 | 120.1 | 41.5 | 17.3 | 440 |
| Example I-4 | 3.04 | 0.116 | 103.9 | 117.1 | 34.7 | 16.2 | 420 |
| Example I-5 | 2.83 | 0.133 | 102.7 | 116.9 | 42.9 | 15.9 | 400 |

(continued)

| Items | MFR (g/10min) | $\rho_{composition}$-$\rho_{PE}$ (g/cm$^3$) | $T_C$ (°C) | $T_m$ (°C) | $\Delta H_{m\ PE}$- $\Delta H_{m\text{-}composition}$ (J/g) | Tensile strength at break (MPa) | Elongation at break (%) |
|---|---|---|---|---|---|---|---|
| Example I-6 | 2.43 | 0.091 | 106.2 | 121.1 | 19.6 | 18.6 | 470 |
| Example I-7 | 2.35 | 0.112 | 105.3 | 120.7 | 32.1 | 17.9 | 450 |
| Comparative Example I-1 | 2.56 | 0.042 | 106.6 | 121.5 | 4.6 | 18.9 | 480 |
| Comparative Example I-2 | 1.49 | 0.329 | 108.9 | 122.7 | 57.4 | 11.5 | 280 |
| Comparative Example I-3 | 1.57 | 0.624 | 107.2 | 121.6 | 59.8 | 12.1 | 300 |
| Comparative Example I-4 | 1.59 | 0.162 | 104.9 | 119.4 | 59.1 | 12.8 | 340 |
| Comparative Example I-5 | 2.19 | 0.104 | 106.7 | 120.8 | 49.9 | 16.5 | 420 |
| Comparative Example I-6 | 0.89 | 0.144 | 105.1 | 119.9 | 49.7 | 11.7 | 300 |
| Example II-1 | 2.08 | 0.079 | 106.8 | 121.1 | 27.7 | 17.2 | 430 |
| Example II-2 | 2.02 | 0.082 | 106.4 | 126.8 | 29.2 | 18.6 | 460 |
| Example II-3 | 2.33 | 0.057 | 106.9 | 120.5 | 10.8 | 18.1 | 440 |
| Example II-4 | 3.21 | 0.066 | 106.1 | 119.9 | 23.4 | 17.4 | 430 |
| Example II-5 | 1.63 | 0.094 | 105.7 | 119.7 | 40.5 | 15.6 | 410 |
| Example II-6 | 1.57 | 0.103 | 104.5 | 119.5 | 45.1 | 15.3 | 400 |
| Comparative Example II-1 | 2.92 | 0.029 | 107.4 | 121.5 | 4.1 | 18.8 | 450 |
| Comparative Example II-2 | 1.49 | 0.329 | 108.9 | 122.7 | 57.4 | 11.5 | 280 |
| Comparative Example II-3 | 1.57 | 0.624 | 107.2 | 121.6 | 59.8 | 12.1 | 300 |
| Comparative Example II-4 | 1.45 | 0.131 | 104.8 | 119.1 | 58.6 | 12.2 | 330 |
| Comparative Example II-5 | 1.96 | 0.087 | 105.2 | 119.7 | 50.6 | 13.5 | 350 |
| Comparative Example II-6 | 1.98 | 0.081 | 105.7 | 119.8 | 50.1 | 13.1 | 310 |

It can be seen from Table 1 that the melt flow rate (MFR) of the polyethylene compositions provided by the present invention met the requirements of the casting process, and especially when the difference between $\Delta H_{m\ PE}$ and $\Delta H_{m\ composition}$ was in a specific range, maleic anhydride copolymer microspheres were uniformly distributed in the composition without agglomeration. At the same time, the compositions of the examples according to the present invention also had good mechanical properties, thereby meeting the requirements for the stretching ratio of the breathable film. The difference between the density $\rho_{composition}$ of the polyethylene composition of the present invention and the density $\rho_{PE}$ of the polyethylene was advantageously within a specific range. The compositions of the present invention could achieve good dispersion of the porogen in the matrix resin without additional use of a coupling agent, a dispersant and a surfactant.

Test examples

The polyethylene compositions of the examples and comparative examples were added to an extrusion casting machine and molten and cast into cast sheets, with the extrusion temperature being 210-240°C and the temperature of the cooling roller being 20-60°C, thereby polyethylene cast films were produced. Then, the cast films were uniaxially stretched 3 times to obtain polyethylene microporous breathable films having an average thickness of 30 μm, wherein the heat setting temperature was 85°C. The properties of the polyethylene microporous breathable films are shown in Table 2.

Table 2

| Items | Surface density ($g/m^2$) | Porosity (%) | Water vapor transmission rate (g/($m^2$·24h)) | Tensile strength (MPa) | | Elongation at break (%) | |
|---|---|---|---|---|---|---|---|
| | | | | MD | TD | MD | TD |
| Example I-1 | 19.06 | 47.6 | 3260 | 27.8 | 6.8 | 151.6 | 406.3 |
| Example I-2 | 19.19 | 47.3 | 3210 | 28.5 | 6.9 | 146.5 | 397.5 |
| Example I-3 | 19.43 | 46.8 | 3240 | 27.2 | 6.7 | 146.2 | 394.1 |
| Example I-4 | 19.12 | 44.6 | 3160 | 26.5 | 6.3 | 138.4 | 385.8 |
| Example I-5 | 19.28 | 45.1 | 3190 | 26.0 | 5.9 | 132.6 | 367.3 |
| Example I-6 | 18.91 | 42.4 | 3110 | 28.1 | 7.2 | 156.1 | 408.8 |
| Example I-7 | 19.01 | 46.8 | 3240 | 27.6 | 6.6 | 148.9 | 397.7 |
| Comparative Example I-1 | 18.32 | 31.4 | 1980 | 28.2 | 6.8 | 147.2 | 398.4 |
| Comparative Example I-2 | 31.14 | 34.7 | 2540 | 19.2 | 3.7 | 112.9 | 311.8 |
| Comparative Example I-3 | 35.68 | 36.1 | 2660 | 21.8 | 4.1 | 118.6 | 320.3 |
| Comparative Example I-4 | 20.17 | 36.4 | 2730 | 23.2 | 4.4 | 131.2 | 329.7 |
| Comparative Example I-5 | 18.97 | 36.7 | 2800 | 26.8 | 6.5 | 141.1 | 389.6 |
| Comparative Example I-6 | 19.74 | 36.5 | 2760 | 19.4 | 3.4 | 91.7 | 262.9 |
| Example II-1 | 18.76 | 44.4 | 3170 | 27.0 | 6.4 | 143.1 | 399.6 |
| Example II-2 | 18.88 | 44.1 | 3150 | 27.9 | 7.1 | 150.6 | 391.2 |
| Example II-3 | 18.48 | 42.3 | 3110 | 27.5 | 6.6 | 147.3 | 395.6 |
| Example II-4 | 18.69 | 43.9 | 3150 | 27.1 | 6.5 | 142.8 | 392.3 |
| Example II-5 | 18.96 | 40.7 | 3090 | 25.6 | 5.8 | 134.7 | 378.8 |
| Example II-6 | 19.1 | 40.2 | 3060 | 25.3 | 5.4 | 129.4 | 369.1 |
| Comparative Example II-1 | 18.25 | 27.2 | 1860 | 28.2 | 6.8 | 147.2 | 398.4 |
| Comparative Example II-2 | 31.14 | 34.7 | 2540 | 19.2 | 3.7 | 112.9 | 311.8 |
| Comparative Example II-3 | 35.28 | 36.1 | 2660 | 21.8 | 4.1 | 118.6 | 320.3 |
| Comparative Example II-4 | 19.28 | 36.2 | 2710 | 22.1 | 4.2 | 121.2 | 322.1 |
| Comparative Example II-5 | 18.92 | 36.1 | 2720 | 22.8 | 4.6 | 127.4 | 332.3 |
| Comparative Example II-6 | 18.85 | 35.9 | 2680 | 22.5 | 4.4 | 119.1 | 320.1 |

It can be seen from Table 2 and the SEM photographs in the drawings that in the examples according to the present invention, by using maleic anhydride copolymer microspheres as organic porogen in the polyethylene matrix resin, the porogen could be well dispersed in the matrix resin without the use of a coupling agent, a dispersant and a surfactant, thereby producing quite a lot of uniformly distributed micropores having a suitable size in the resulting film, thus making the obtained breathable film have a higher breathability.

In the comparative examples using an inorganic porogen or a cross-linked starch as organic porogen, without

the addition of a dispersant, a coupling agent and a surfactant, both the properties of the compositions and the properties of the prepared breathable films were worse than those of the examples according to the present invention, and there were fewer and non-uniformly distributed micropores in the resulting films, thus the water vapor transmission rate was lower.

As can be seen from the comparison between Example I-1 and Comparative Example I-5 and the comparison between Example II-1 and Comparative Example II-5, when maleic anhydride copolymer microspheres having an average particle size of less than 500 nm were used, the pores were too small, and both the properties of the polyethylene compositions and the properties of the resulting films were worse, wherein the water vapor transmission rate was lower than 3000g/($m^2$·24h).

As can be seen from the comparison between Example II-1 and Comparative Example II-6, when the porogen was larger (average particle size >2000nm), the pores were larger and their quantity was less, the water vapor transmission rate was worse, and the mechanical properties were negatively affected.

As can be seen from the comparison between Example I-1 and Example I-2, compared to using LLDPE alone as the matrix resin, using a combination of LLDPE and LDPE as the matrix resin not only improved the processing performance, but also promoted dispersion of the porogen to a certain extent, thereby achieving increased water vapor transmission rate.

The results show that the polyethylene breathable films produced by the examples according to the present invention had a high air permeability and good mechanical properties, thus could be widely used in the field of breathable composite articles such as water-blocking and moisture-permeable materials, sanitary articles, medical articles, food packaging or building articles, etc.

Although the present invention has been described in detail and illustrated by examples, it will be apparent to those skilled in the art that other modifications and variations can be made within the spirit and scope of the invention. Furthermore, it should be understood that various aspects described in the present invention, various parts of different embodiments, and various features as listed may be combined or interchanged in whole or in part. Furthermore, those skilled in the art will appreciate that the foregoing description is by way of example only and is not intended to limit the present invention.

## Claims

1. A polyethylene composition, comprising a polyethylene matrix resin and a porogen,

   wherein the content of the porogen is 30-110 parts by weight, based on 100 parts by weight of the polyethylene matrix resin, and
   the porogen comprises maleic anhydride copolymer microspheres, wherein the copolymer in the microspheres comprises a structural unit A from maleic anhydride and a structural unit B from a vinyl-containing comonomer M; and the average particle size of the maleic anhydride copolymer microspheres is 500-2000 nm.

2. The polyethylene composition according to claim 1, wherein the melting enthalpy $\Delta H_{m\ PE}$ of the polyethylene matrix resin and the melting enthalpy $\Delta H_{m\ composition}$ of the polyethylene composition satisfy the following relationship: the difference between $\Delta H_{m\ PE}$ and $\Delta H_{m\ composition}$ of 8-48J/g, preferably 10-45J/g, more preferably 20-45J/g.

3. The polyethylene composition according to claim 1 or 2, wherein the density of the polyethylene composition $\rho_{composition}$ and the density of polyethylene $\rho_{PE}$ satisfy the relationship formula: the difference between $\rho_{composition}$ and $\rho_{PE}$ of 0.045-0.155g/$cm^3$; when the maleic anhydride copolymer microspheres are non-crosslinked maleic anhydride copolymer microspheres, the difference is preferably 0.055-0.155g/$cm^3$, and more preferably 0.068-0.145g/$cm^3$; and when the maleic anhydride copolymer microspheres are cross-linked maleic anhydride copolymer microspheres, the difference is preferably 0.045-0.120g/$cm^3$, and more preferably 0.050-0.110g/$cm^3$.

4. The polyethylene composition according to any one of claims 1-3, wherein based on 100 parts by weight of the polyethylene matrix resin, the content of the porogen is 35-110 parts by weight, preferably 50-100 parts by weight, more preferably 50-90 parts by weight.

5. The polyethylene composition according to any one of claims 1-4, wherein the maleic anhydride copolymer microspheres have an average particles size of 500-1700nm, preferably 500-1600nm, more preferably 600-1300nm, more preferably 800-1300nm; preferably, the copolymer microspheres are monodispersed copolymer microspheres, particularly those having a particle size dispersion coefficient of 1.05-1.0001, preferably 1.035-1.002, more preferably 1.028-1.002.

6. The polyethylene composition according to any one of claims 1-5, wherein the maleic anhydride copolymer microspheres are spherical or near-spherical.

7. The polyethylene composition according to any one of claims 1-6, wherein the molar ratio of the structural unit A to the structural unit B is in the range of (0.5:1) to (1:0.5), preferably (0.75:1) to (1:0.75); preferably, based on the total molar amount of structural units A and B in the copolymer, the molar content of structural unit A is 48-55%, and the molar content of structural unit B is 45-52%; more preferably, the molar content of the structural unit A is 49-51%, and the molar content of the structural unit B is 49-51%.

8. The polyethylene composition according to any one of claims 1-7, wherein the comonomer M is at least one selected from the group consisting of styrene, $\alpha$-methyl styrene, vinyl acetate, mixed C4 and mixed C5, wherein the mixed C4 and mixed C5 are preferably the C4 and C5 fractions obtained from the ethylene cracking process.

9. The polyethylene composition according to any one of claims 1-8, wherein the porogen is cross-linked maleic anhydride copolymer microspheres, wherein the copolymer in the microspheres additionally comprises a cross-linking structural unit from a cross-linking agent; wherein the cross-linking degree of the copolymer microspheres is preferably ≥65%, preferably ≥70%; wherein the cross-linking agent is preferably selected from vinyl-containing monomers with difunctionality or higher functionality which are capable of free radical polymerization; preferably, the cross-linking agent is at least one selected from the group consisting of divinylbenzene and an acrylate cross-linking agent containing at least two acrylate groups; more preferably, the cross-linking agent is at least one selected from the group consisting of divinylbenzene, propylene glycol bis(meth)acrylates, ethylene glycol bis(meth)acrylates, trimethylolpropane tri(meth)acrylate, bistrimethylolpropane tetra(meth)acrylate, polyethylene glycol bis(meth)acrylate, phthalic acid diethylene glycol diacrylate, pentaerythritol tetra(meth)acrylate, dipentaerythritol penta(meth)acrylate, dipentaerythritol hexa(meth)acrylate and ethoxylated multifunctional acrylate; preferably, the molar ratio of the structural unit A, the structural unit B and the cross-linking structural unit is 100:(100-120):(1-40) , preferably 100:(100-105):(10-30).

10. The polyethylene composition according to any one of claims 1-8, wherein the maleic anhydride copolymer microspheres are prepared by a method comprising the following steps:

(1) dissolving maleic anhydride, a comonomer and an initiator in a reaction medium in an inert atmosphere, to form a homogeneous solution, wherein the comonomer is preferably at least one selected from the group consisting of styrene, $\alpha$-methyl styrene and vinyl acetate;
(2) subjecting the homogeneous solution to polymerization reaction to obtain a copolymer emulsion suspension, followed by solid-liquid separation to obtain the maleic anhydride copolymer microspheres, wherein the polymerization is preferably performed at a polymerization temperature of 61-100°C for a polymerization time period of 1-24h;

wherein preferably, based on the total weight of the maleic anhydride and comonomer, the maleic anhydride is used in an amount of 50-90wt%, and the comonomer is used in an amount of 10-50wt%;
the reaction medium is preferably a mixture of a compound represented by formula (1) and an alkane:

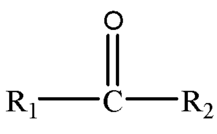

formula (1)

wherein $R_1$ and $R_2$ are each independently an alkyl having 1 to 6 carbon atoms, preferably methyl or ethyl;
the alkane is preferably an alkane having 6 to 12 carbon atoms.

11. The polyethylene composition according to any one of claims 1-8, wherein the maleic anhydride copolymer microspheres are prepared by a method comprising the following step:

subjecting maleic anhydride and a comonomer M to copolymerization reaction under an inert atmosphere, in an organic solvent and in the presence of an initiator, and
then separating the product obtained by the polymerization reaction, to obtain maleic anhydride copolymer microspheres,

wherein the comonomer M is preferably selected from mixed C4 and/or mixed C5; the copolymerization reaction is preferably carried out at a temperature of 50-100°C, under a pressure of 0.2-2MPa, and for a reaction time period of 5-10h;
preferably, the weight ratio of the maleic anhydride to the comonomer is 1: (0.2-3);
preferably, the organic solvent is selected from an organic acid alkyl ester, a mixture of an organic acid alkyl ester and an alkane, or a mixture of an organic acid alkyl ester and an aromatic hydrocarbon, preferably, at least one selected from the group consisting of isoamyl acetate, butyl acetate, isopropyl acetate and ethyl acetate.

**12.** The polyethylene composition according to claim 9, wherein the cross-linked maleic anhydride copolymer microspheres are prepared by a method comprising the following step:

contacting maleic anhydride, a comonomer M and a cross-linking agent under an inert atmosphere, in an organic solvent and in the presence of an initiator, for copolymerization reaction, to obtain cross-linked maleic anhydride copolymer microspheres, wherein the comonomer M is at least one selected from the group consisting of styrene, α-methyl styrene, vinyl acetate, mixed C4 and mixed C5; preferably, relative to 100 mol of maleic anhydride, the amount of the cross-linking agent is 1-40 mol, the amount of the comonomer M is 50-150 mol, and the amount of the initiator is 0.05-10 mol; the copolymerization reaction is preferably carried out at a temperature of 50-90°C, under a pressure of 0.1-1MPa, and for a reaction time period of 3-15h;
preferably, the organic solvent is selected from an organic acid alkyl ester, a mixture of an organic acid alkyl ester and an alkane, or a mixture of an organic acid alkyl ester and an aromatic hydrocarbon, preferably, at least one selected from the group consisting of isoamyl acetate, butyl acetate, isopropyl acetate and ethyl acetate.

**13.** The polyethylene composition according to any one of claims 1-12, wherein the polyethylene matrix resin is selected from ethylene homopolymers (such as low density polyethylene, high density polyethylene and ultra-high molecular weight polyethylene), ethylene copolymers (such as linear low density polyethylene, very low density polyethylene, high density polyethylene, medium density polyethylene, ethylene-vinyl acetate copolymer and ethylene-methyl acrylate copolymer) and blends thereof or blends thereof with other polyolefins (such as propylene homopolymers, propylene-based copolymers, polyolefin plastomers, polyolefin elastomers and polybutylene), and preferably is selected from a mixture of linear low density polyethylene and low density polyethylene, wherein preferably, the amount of the linear low density polyethylene is 60-99 parts by weight, preferably 70-95 parts by weight; and the amount of the low density polyethylene is 1-40 parts by weight, preferably 5-30 parts by weight, based on 100 parts by weight of the polyethylene matrix resin;

wherein the linear low density polyethylene is preferably a copolymer of ethylene and α-olefin; preferably, the α-olefin is at least one selected from the group consisting of butene, hexene and octene; preferably, the linear low density polyethylene has at least one of the following properties: a density of 0.905g/$cm^3$-0.935g/$cm^3$; a melt flow rate at 190°C and under a load of 2.16kg of 0.5g/10min-10g/10min, preferably 2g/10min-6g/10min; and a molecular weight distribution of 2-12, preferably 2-10;
the low density polyethylene preferably has at least one of the following properties: a density of 0.913g/$cm^3$-0.934g/$cm^3$; a melt flow rate at 190°C and under a load of 2.16kg of 0.1g/10min-12g/10min, preferably 2g/10min-9g/10min; and a molecular weight distribution of 5-11, preferably 6-10.

**14.** The polyethylene composition according to any one of claims 1-13, wherein the composition additionally comprises an antioxidant, wherein the content of the antioxidant is preferably 0.1-2.5 parts by weight, preferably 0.1-2 parts by weight, more preferably 0.1-1.5 parts by weight, still more preferably 0.2-1.5 parts by weight, based on 100 parts by weight of the polyethylene matrix resin;
wherein preferably, the antioxidant is at least one selected from the group consisting of pentaerythritol tetrakis[[3-(3,5-di-tert-butyl-4-hydroxyphenyl)propionate], tris(2,4-di-tert-butylphenyl)phosphite, octadecyl propionate and alkylated polyphenols, more preferably, is an antioxidant composite additive comprising an antioxidant and an acid acceptor, wherein preferably, the weight ratio of the antioxidant to the acid acceptor is 1-6:1; the acid acceptor is preferably a stearate salt, and preferably at least one selected from the group consisting of calcium stearate, zinc stearate and sodium stearate, more preferably, the antioxidant composite additive is a mixture of pentaerythritol tetrakis[β-(3,5-di-tert-butyl-4-hydroxyphenyl)propionate], tris(2,4-di-tert-butylphenyl)phosphite and calcium stearate, wherein the weight ratio of pentaerythritol tetrakis[β-(3,5-di-tert-butyl-4-hydroxyphenyl)propionate], tris(2,4-di-tert-butylphenyl)phosphite and calcium stearate is preferably (1-3):(1-3):1.

**15.** The polyethylene composition according to any one of claims 1-14, wherein the polyethylene composition does not comprise a coupling agent, a dispersant or a surfactant or a combination of two or three of them.

**16.** The polyethylene composition according to any one of claims 1-15, wherein the composition is in the form of powders or pellets, wherein the pellets are obtained by melt blending, extruding, pelletizing and drying the polyethylene composition, preferably, the melt blending and extruding are carried out in a twin-screw extruder.

**17.** The polyethylene composition according to any one of claims 1-16, wherein the composition additionally comprises an inorganic porogen selected from the group consisting of calcium carbonate, barium sulfate, titanium dioxide, silica and talc as a secondary porogen.

**18.** Use of the polyethylene composition according to any one of claims 1-17 for the preparation of a polyolefin microporous breathable film.

**19.** A polyolefin microporous breathable film, prepared from the polyethylene composition according to any one of claims 1-17, and preferably prepared by extrusion casting and stretching, wherein preferably, the polyethylene composition is added to an extrusion casting machine and molten and cast into a cast sheet, with the extrusion temperature being 210-240°C and the temperature of the cooling roller being 20-60°C, thereby a polyethylene cast film is produced, and the cast film is uniaxially stretched 2-5 times to obtain a polyethylene microporous breathable film, wherein the heat setting temperature is 70-120°C.

**20.** The polyolefin microporous breathable film according to claim 19, wherein the film has at least one of the following characteristics:

1) a thickness of 25-35μm;
2) a water vapor transmission rate of greater than or equal to 3060g/($m^2$·24h);
3) a porosity of greater than or equal to 38%;
4) a longitudinal tensile strength ≥ 25MPa, a transverse tensile strength ≥ 5MPa, a longitudinal elongation at break ≥ 125%, and a transverse elongation at break ≥ 355%; and
5) a surface density of the breathable film of less than or equal to 24.5g/$m^2$, measured for a sample having a thickness of 30 pm.

**21.** A breathable composite article comprising the polyolefin microporous breathable film according to claim 19 or 20, particularly sanitary articles, medical articles, food packaging or building articles, such as disposable medical and sanitary products, baby diapers, adult care products, medical protective clothing, wound care bandages, dressings, food packaging films, and industrial protective clothing.

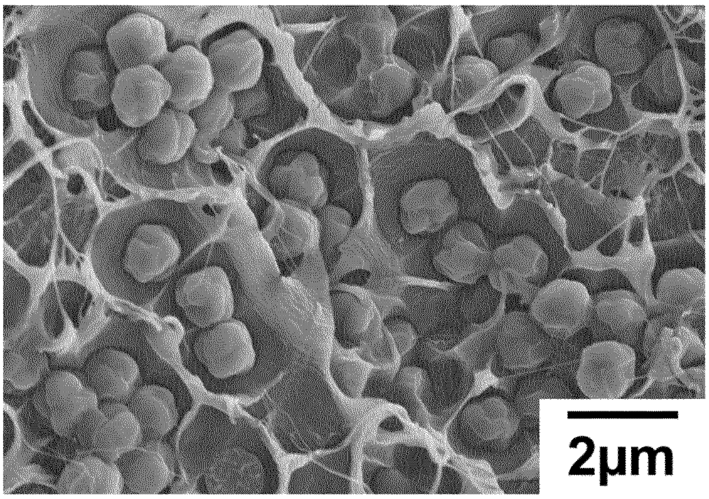


Fig. 1

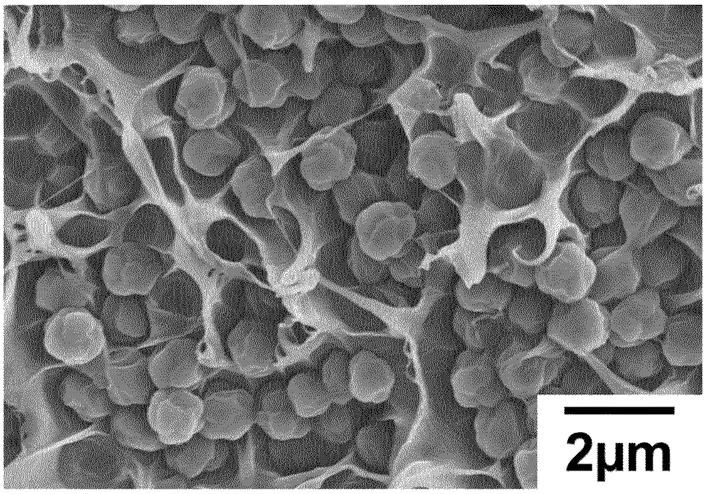


Fig. 2

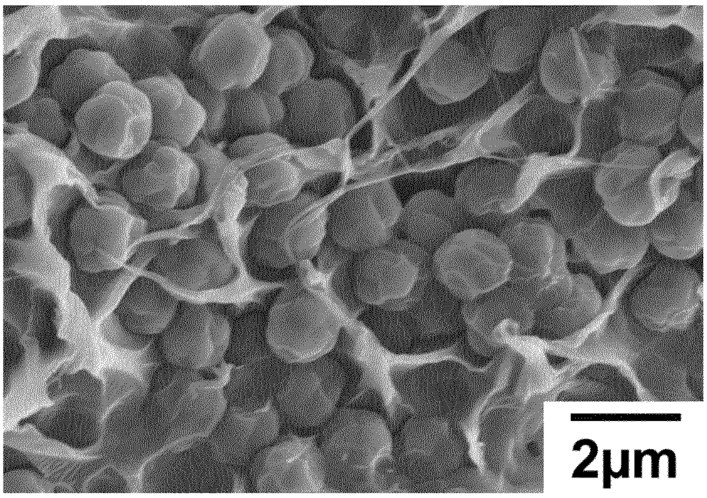


Fig. 3

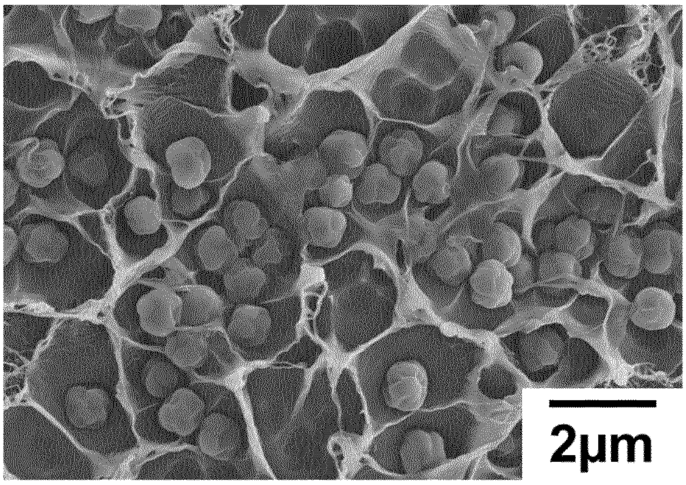


Fig. 4

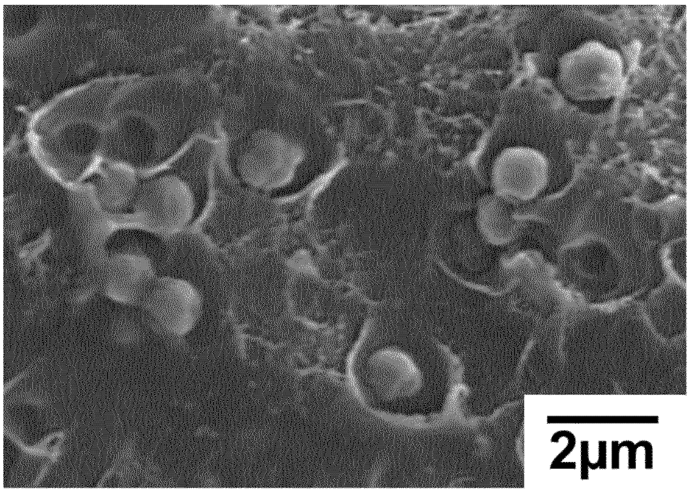


Fig. 5

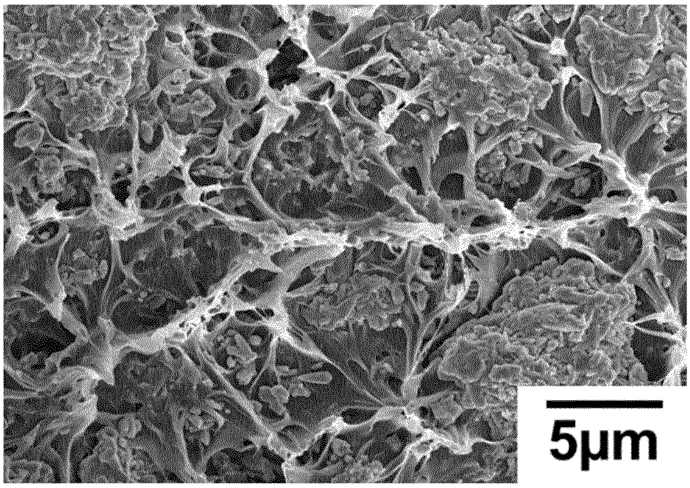


Fig. 6

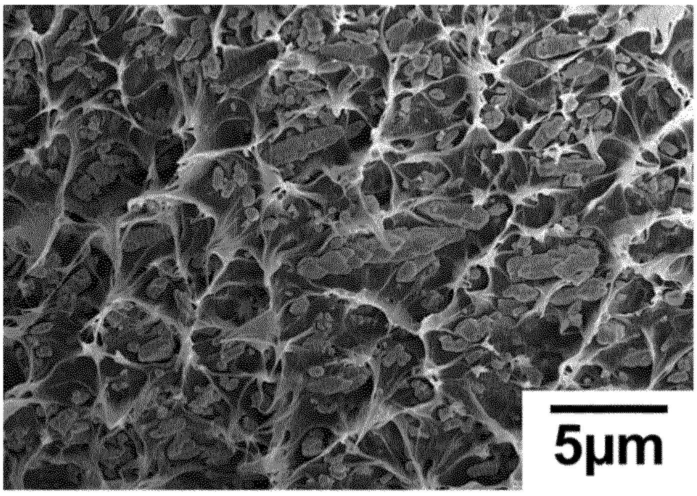


Fig. 7

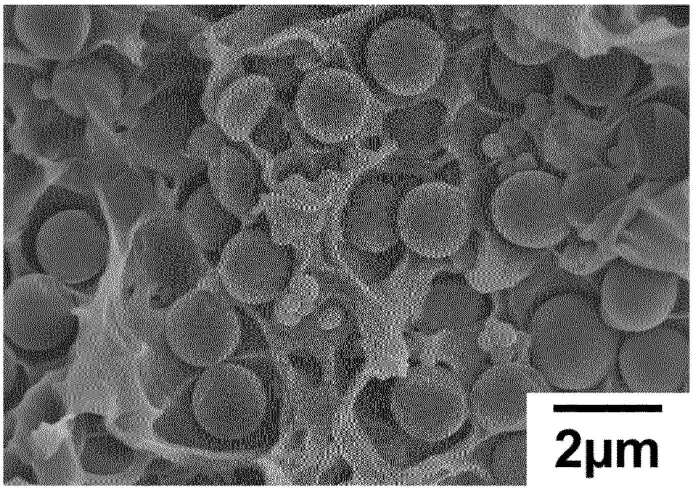


Fig. 8

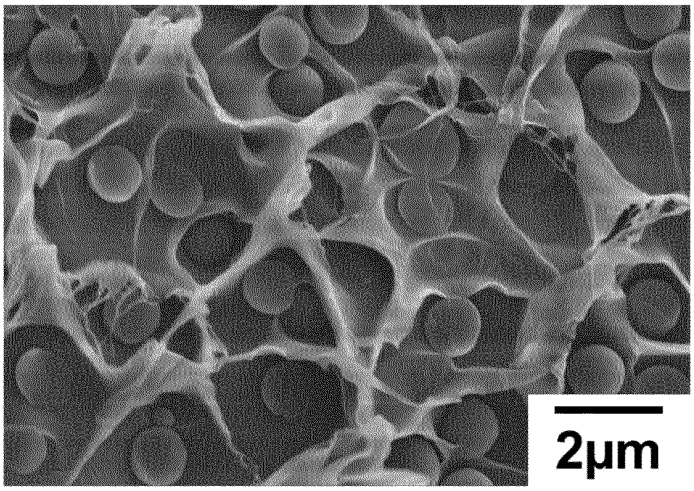


Fig. 9

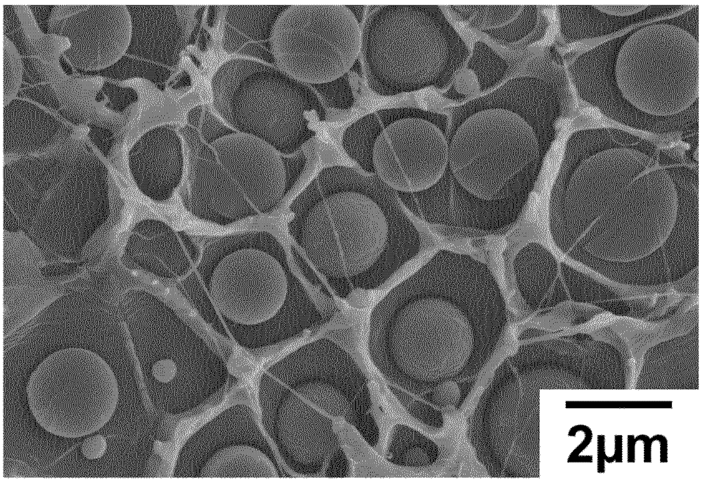


Fig. 10

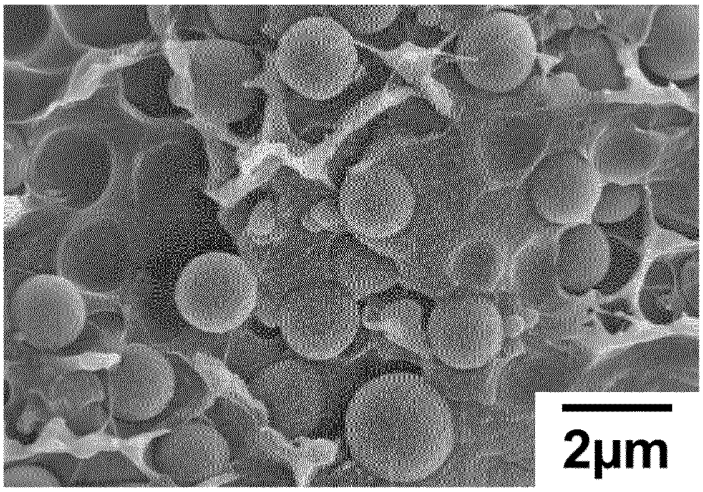


Fig. 11

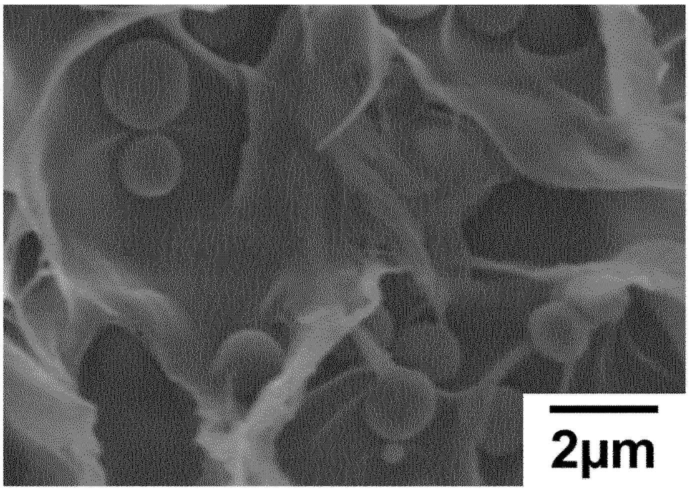


Fig. 12

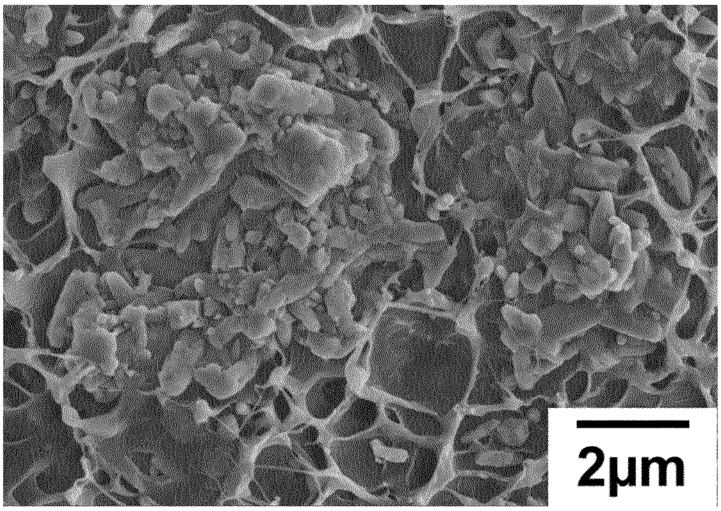


Fig. 13

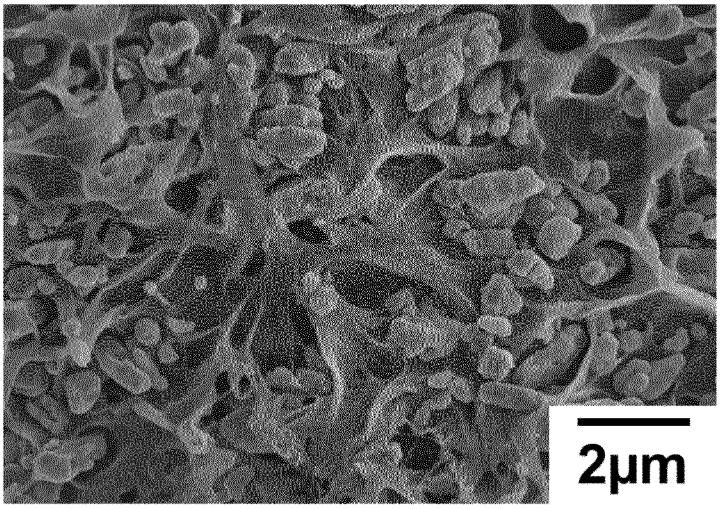


Fig. 14

## INTERNATIONAL SEARCH REPORT

International application No. **PCT/CN2022/128276**

**A. CLASSIFICATION OF SUBJECT MATTER**

C08L 23/08(2006.01)i; C08L 35/00(2006.01)i; C08J 9/00(2006.01)i; C08K 5/103(2006.01)i; C08K 5/134(2006.01)i; C08K 5/526(2006.01)i

According to International Patent Classification (IPC) or to both national classification and IPC

**B. FIELDS SEARCHED**

Minimum documentation searched (classification system followed by classification symbols)

C08L C08J C08K

Documentation searched other than minimum documentation to the extent that such documents are included in the fields searched

Electronic data base consulted during the international search (name of data base and, where practicable, search terms used)

CNABS; CNTXT; DWPI; WPABS; WPABSC; ENTXTC; ENTXT; CNKI; Web of science: 聚乙烯, 乙烯, PE, LLDPE, LDPE, 致孔剂, 成孔剂, 造孔剂, 用量, 含量, 孔, 泡, 马来酸酐, 微球, 粒径, 交联, 膜, polyethylene, ethylene, porogen, amount, content, pore, bubble, maleic anhydride, microsphere, particle size, diameter, crosslink, membrane

**C. DOCUMENTS CONSIDERED TO BE RELEVANT**

| Category* | Citation of document, with indication, where appropriate, of the relevant passages | Relevant to claim No. |
|---|---|---|
| A | CN 111849055 A (CHINA PETROLEUM & CHEMICAL CORPORATION et al.) 30 October 2020 (2020-10-30)<br>description, paragraphs [0005]-[0015] | 1-21 |
| A | US 2004253442 A1 (KALANTAR T H et al.) 16 December 2004 (2004-12-16)<br>claims 1-35 | 1-21 |
| A | CN 110982171 A (JINYOUNG (XIAMEN) ADVANCED MATERIALS TECHNOLOGY CO., LTD. et al.) 10 April 2020 (2020-04-10)<br>description, paragraphs 0005-0029 | 1-21 |
| A | CN 112708021 A (CHINA PETROLEUM & CHEMICAL CORPORATION et al.) 27 April 2021 (2021-04-27)<br>description, paragraphs 0007-0024 | 1-21 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **12 January 2023** | **20 January 2023** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.
**PCT/CN2022/128276**

| Patent document cited in search report | Publication date (day/month/year) | Patent family member(s) | Publication date (day/month/year) |
|---|---|---|---|
| CN 111849055 A | 30 October 2020 | CN 111849055 B | 19 November 2021 |
| US 2004253442 A1 | 16 December 2004 | KR 100752611 B1 | 29 August 2007 |
| CN 110982171 A | 10 April 2020 | CN 110982171 B | 01 July 2022 |
| CN 112708021 A | 27 April 2021 | None | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 102336940 A
- CN 1176986 C
- CN 101747548 A


### Non-patent literature cited in the description


- **BO SHI et al.** New Breathable Films Using a Themoplastic Cross-Linked Starch as a Porogen. *J. Appl. Polym. SCI,* 2014, vol. 41016, 1-8